# EUROPEAN PATENT SPECIFICATION

(11) **EP 3 378 330 B1**
(45) Date of publication and mention of the grant of the patent: **08.01.2020**
(21) Application number: 17162250.9
(22) Date of filing: 22.03.2017
(51) Int. Cl.: A23L 2/46, A23L 3/02, A23L 3/04, B65B 55/02, B65B 65/00

(54) **PASTEURIZATION PLANT AND METHOD FOR OPERATING A PASTEURIZING PLANT**
PASTEURISIERUNGSANLAGE UND VERFAHREN ZUM BETRIEB EINER PASTEURISIERUNGSANLAGE
INSTALLATION DE PASTEURISATION ET SON PROCÉDÉ DE FONCTIONNEMENT

(43) Date of publication of application: 26.09.2018
(73) Proprietor: Red Bull GmbH, 5330 Fuschl am See (AT)
(72) Inventor: CONCIN, Roland, 5330 Fuschl am See (AT); DEMOULIN, Gunnar, 5026 Salzburg (AT); RINDERER, Christian, 5330 Fuschl am See (AT)
(74) Representative: Burger, Hannes

(56) References cited:
- DE-A1-102013 112 398
- FR-A1- 2 520 984
- JP-A- 2011 255 952
- US-A1- 2010 186 347
- US-A1- 2012 312 419

## Description

The invention is defined by the claims and relates to a plant for the pasteurization of foodstuff and method for operating such pasteurizing plant.

The pasteurization of foodstuff nowadays is commonly used to minimize the amount of microorganism in the foodstuff. Amongst other things, the shelf life of the foodstuff can be prolonged in this way, and possible health problems arising from harmful bacteria or from spoiled food caused by microorganisms for example, can be impeded.

A widely-used method for pasteurizing foodstuff comprises filling the foodstuff into containers, closing the containers and then applying a temperature-controlled process liquid onto the containers. Frequently, so-called tunnel pasteurizers are used for such purpose, wherein the containers filled with the foodstuff are transported through several temperature treatment zones. Such tunnel pasteurizers are for example commonly used to pasteurize beverages filled into bottles or cans.

In tunnel pasteurizers, the containers filled with the foodstuff usually are first treated in one or more heating zones with process liquid having a moderate temperature level, to allow for gentle heating up of the foodstuff. To this end the containers may successively be treated in several heating zones with process liquid having rising temperature levels. Hereafter, process liquid having a temperature level high enough to kill microorganisms is applied onto the containers filled with the foodstuff in one or more pasteurizing zones. Subsequently the containers have to be cooled down in one or several cooling zones in most cases, in order to prevent deterioration of the foodstuff within the containers.

For such pasteurization processes, process liquid having low temperature level, as well as process liquid having high temperature level have to be provided. It is known in the art, to use recuperation of process liquid for the heating or cooling in the treatment zones. It is also known in the art, to use a heat pump for transferring thermal energy from process liquid having low temperature level to process liquid having high temperature level. This is for example disclosed in JP 2011-255952 A.

DE 10 2013 112 398 A1 for example discloses a tunnel pasteurizer, wherein for recuperation process liquid after having passed heating zones is transferred to cooling zones and vice versa. In addition, the pasteurizing line in DE 10 2013 112 398 A1 discloses a heat pump, which is used to transfer thermal energy from process liquid having low temperature level to process liquid having high temperature level within the pasteurizing line.

In principle, heat pumps are the most energy-efficient means for providing thermal energy within pasteurizing lines, which require both heating and cooling procedures. However, primarily due to the varying operation conditions of pasteurizing lines, as the one disclosed in DE 10 2013 112 398 A1, the energy efficiency of the heat pump cannot be exploited to the best possible extend, and further need exists for optimizing the energy management of pasteurizing plants.

The objective of the invention is to meet this need, and to provide an improved pasteurizing plant and an improved method for operating a pasteurizing plant, in order to enhanced the energy efficiency of the pasteurizing plant.

This objective is achieved by a method and a pasteurizing plant as defined in the claims.

A method for operating a pasteurizing plant is provided. The pasteurizing plant comprises a first pasteurizing line and at least a second pasteurizing line. In each of the first and second pasteurization lines sealed containers filled with foodstuff are conveyed through at least one heating zone and subsequently through at least one cooling zone. In each of the first and second pasteurization lines, the foodstuff is heated in the at least one respective heating zone by dispensing a temperature-controlled process liquid onto the containers, and in each of the first and second pasteurizing lines the foodstuff subsequently is cooled in the at least one respective cooling zone by dispensing a temperature-controlled process liquid onto the containers. Furthermore, a heating liquid is heated by means of a heating means of a heat pump and a cooling liquid is cooled by means of a cooling means of the heat pump.

Based on heating demand for the first and second pasteurizing lines, the heated heating liquid from the heating means of the heat pump is used to heat process liquid with a high temperature level of the first pasteurizing line by means of a first heating heat exchanger, and/or the heated heating liquid from the heating means of the heat pump is used to heat process liquid with a high temperature level of the second pasteurizing line by means of a second heating heat exchanger. In addition, based on cooling demand for the first and second pasteurizing lines, the cooled cooling liquid from the cooling means of the heat pump is used to cool process liquid with a low temperature level of the first pasteurizing line by means of a first cooling heat exchanger, and/or the cooled cooling liquid from the cooling means of the heat pump is used to cool process liquid with a low temperature level of the second pasteurizing line by means of a second cooling heat exchanger.

For heating the process liquid with a high temperature level of the first and/or the second pasteurizing line, the heated heating liquid from the heating means of the heat pump is conveyed through a primary side of the first and/or the second heating heat exchanger, while the process liquid of the first and/or the second pasteurizing line is conveyed through a secondary side of the first and/or the second heating heat exchanger. For cooling the process liquid with a low temperature level of the first and/or the second pasteurizing line, the cooled cooling liquid from the cooling means of the heat pump is conveyed through a primary side of the first and/or the second cooling heat exchanger, while the process liquid of the first and/or the second pasteurizing line is conveyed through a secondary side of the first and/or the second cooling heat exchanger. The heating liquid is heated by conveying the heating liquid through the heating means of the operated heat pump, and the cooling liquid is cooled by conveying the heating liquid through the cooling means of the operated heat pump.

By way of the method, the energy efficiency of the pasteurizing plant can be significantly enhanced, as the heated heating liquid and the cooled cooling liquid can be used according to the heating and cooling demands of the first and the at least second pasteurizing lines respectively. Such varying heating and cooling demands may for example result from different pasteurizing temperatures or different target cooling temperatures being required for individual foodstuffs. Vast differences in heating and cooling demands also result upon starting up a pasteurizing line, or when finishing the pasteurization of a charge, for example for a batch change or for maintenance. Upon starting up, a pasteurizing line has a lot of heating demand and low or no cooling demand, as initially a lot of containers must be heated up, while no or only a few containers must be cooled down. Upon completing a cycle of a pasteurizing line and shutting down a pasteurizing line, a lot of cooling demand will result while the heating demand drops, as at the end of a cycle, a lot of containers must finally be cooled down, while no new containers to be heated are inserted into the pasteurizing line. Differences in demand may for example also result from the initial temperatures of the containers being inserted into a pasteurizing line. The actual heating and cooling demands of the pasteurizing lines can for example be determined by placing temperature sensors at suitable positions, to measure and monitor the temperatures of the process liquids in the first and second pasteurizing lines.

The heated heating liquid may be used to heat the process liquid in a pasteurizing line having high heating demand. On the other hand, the cooled cooling liquid may be used to cool process liquid in a pasteurizing line having high cooling demand. Thus, by using the method, thermal energy can efficiently even be transferred between pasteurizing lines, for example by cooling process fluid of a pasteurizing line with high actual cooling demand, and transferring the excess thermal energy to a pasteurizing line with high heating demand, by heating the process liquid of this pasteurizing line. Such transferring of thermal energy between pasteurizing lines can thus be achieved without mixing the process liquids of the pasteurizing lines.

Finally, the method enables a continuous, energy-efficient operation of the heat pump at a high-performance level, as both the heating and cooling capacity of the heat pump can be exploited to a very high extend. This allows for operation of the heat pump in a region of a very high coefficient of performance (COP) for heating and cooling. A person skilled in the art will appreciate, that the method can of course be extended to operating more than two pasteurizing lines, for example by heating and/or cooling process liquid of a third pasteurizing line, a fourth pasteurizing line and so on. Operation of additional pasteurizing lines may be included with method in the same way as operation of the first and the second pasteurizing lines.

An embodiment of the method may comprise, that based on heating demand for the first and second pasteurizing lines, the heated heating liquid from the heating means of the heat pump is fed into an upper region of a heating liquid buffer tank, and heating liquid is fed back into the heating means of the heat pump from a lower region of the heating liquid buffer tank.

By way of these measures, the energy efficiency of operation of the pasteurizing plant can be further enhanced. In case of low or no heating demand in the pasteurizing lines for example, the heated heating liquid can be used to rise the overall temperature level in the heating liquid buffer tank. Therefore, any excess thermal energy generated by heat pump is not wasted, but can temporarily be stored in the heating liquid buffer tank for later use. The heating liquid buffer tank may preferably be operated as layered storage tank, with temperature sensors being used to monitor the temperature levels of the heating liquid at various heights within the heating liquid buffer tank.

A further embodiment may then for example comprise, that based on heating demand for the first and second pasteurizing lines, heating liquid is fed into the first heating heat exchanger and/or the second heat exchanger from the upper region of the heating liquid buffer tank in order to heat the process liquid with a high temperature level of the first pasteurizing line and/or the second pasteurizing line, and heating liquid from the first heat exchanger and/or from the second heat exchanger is fed back into the lower region of the heating liquid buffer tank.

Such procedure is of particular advantage, when high heating demand exists in the first and/or second pasteurizing lines. In this way, the heating capacity of the heat pump can be exploited to a higher extend, and the use of additional heating means with lower energy efficiency can at least be restricted during operation of the pasteurizing plant.

Preferably, the heated heating liquid from the heating means is fed into the heating liquid buffer tank via a hollow profile body with openings within a section of its circumferential surface, the hollow profile body being arranged within the upper region of the heating liquid buffer tank such that all openings face towards an upper end of the heating liquid buffer tank, and that heating liquid from the heating liquid buffer tank is fed back into the heating means via a further hollow profile body with openings within a section of its circumferential surface, the further hollow profile body being arranged within the lower region of the heating liquid buffer tank such that all openings face towards a lower end of the heating liquid buffer tank.

Through these measures, the heating liquid buffer tank may be operated as layered storage tank in a very efficient way. The heating liquid heated by the heating means of the heat pump has a comparatively high temperature level. Upon loading, this heated heating liquid with high temperature level can be guided or pushed towards the upper end of the heating liquid buffer tank by means of the hollow profile body arranged in the upper region, thus displacing layers of heating liquid with moderate temperature level towards lower regions of the heating liquid buffer tank. Heating liquid with a comparatively low temperature level stratified/layered in the lower regions of the heating liquid buffer tank, can on the other hand be conveyed to the heating means of the heat pump via the further hollow profile body. In this way, an undesirable mixing of the heating liquid layers with different temperature levels in the heating liquid buffer tank, and thus an undesired levelling out of temperatures can be impeded. In the following, this allows for operation of the heat pump at best possible COP for heating, as stable temperature levels of the heating liquid in the upper and lower regions of the heating liquid buffer tank can be provided for a long time while loading the heating liquid buffer tank with thermal energy.

Furthermore, it may be convenient, that based on heating demand for the first and second pasteurizing lines and based on temperatures of the heating liquid in the heating liquid buffer tank, the heating liquid from the upper region of the heating liquid buffer tank is fed into the first heating heat exchanger and/or the second heating heat exchanger via the hollow profile body, and heating liquid from the first and/or second heating heat exchanger is fed back into the lower region of the heating liquid buffer tank via the further hollow profile body.

In this manner, the heating liquid buffer tank can also be efficiently operated as layered buffer tank upon unloading. With such layered liquid buffer tank a stable long-term operation of the heat pump at high COP is enabled.

Independently, an embodiment of the method may comprise that, based on cooling demand for the first and second pasteurizing lines, cooled cooling liquid from the cooling means of the heat pump is fed into a lower region of a cooling liquid buffer tank, and cooling liquid is fed back into the cooling means of the heat pump from an upper region of the cooling liquid buffer tank.

The cooled cooling liquid can be used to lower the overall temperature level in the cooling liquid buffer tank in this way, and the cooling capacity of the heat pump can be used fully even if low or no cooling demand exists in any of the pasteurizing lines. The cooling liquid buffer tank may also preferably be operated as layered storage tank, with temperature sensors being used to monitor the temperature levels of the cooling liquid at various heights within the cooling liquid buffer tank.

A further embodiment may comprise, that based on cooling demand for the first and second pasteurizing lines, cooling liquid is fed into the first cooling heat exchanger and/or the second cooling heat exchanger from the lower region of the cooling liquid buffer tank in order to cool the process liquid with a low temperature level of the first pasteurizing line and/or the second pasteurizing line, and cooling liquid from the first cooling heat exchanger and/or from the second cooling heat exchanger is fed back into the upper region of the cooling liquid buffer tank.

Such procedure is of particular advantage, when a high cooling demand exists in the first and/or second pasteurizing lines. By way of these measures, also the cooling capacity of the heat pump can be exploited to a higher extend, and the use of additional cooling means with lower energy efficiency can at least be restricted during operation of the pasteurizing plant.

Preferably, the cooled cooling liquid from the cooling means of the heat pump is fed into the cooling liquid buffer tank via a hollow profile body with openings within a section of its circumferential surface, the hollow profile body being arranged within the lower region of the cooling liquid buffer tank such that all openings face towards a lower end of the cooling liquid buffer tank, and that cooling liquid from the cooling liquid buffer tank is fed back into the cooling means via a further hollow profile body with openings within a section of its circumferential surface, the further hollow profile body being arranged within the upper region of the cooling liquid buffer tank such that all openings face towards an upper end of the cooling liquid buffer tank.

In this way, also the cooling buffer tank may be operated as layered storage tank in a very efficient way, as the cooling liquid from the cooling means, having a comparatively low temperature level, can be guided or pushed to the lower end of the cooling liquid buffer tank by means of the hollow profile body arranged in the lower region of the cooling buffer tank. Upon loading, this cooling liquid with low temperature level displaces layers of cooling liquid with moderate temperature level towards higher regions of the cooling liquid buffer tank. On the other hand, cooling liquid with a comparatively high temperature level stratified/layered in the upper regions of the cooling liquid buffer tank can be conveyed to the cooling means of the heat pump via the further hollow profile body. In this way, an undesirable mixing of the cooling liquid layers with different temperature levels in the cooling liquid buffer tank, and thus an undesired levelling out of temperatures can be impeded. In the following, this allows for operation of the heat pump at best possible COP for cooling, as stable temperature levels of the cooling liquid in the lower and upper regions of the cooling liquid buffer tank can be provided for a long time while loading the cooling liquid buffer tank.

Furthermore, it may be advantageous, that based on cooling demand for the first and second pasteurizing lines and based on temperatures of the cooling liquid in the cooling liquid buffer tank, the cooling liquid from the lower region of the cooling liquid buffer tank is fed into the first cooling heat exchanger and/or the second cooling heat exchanger via the hollow profile body, and cooling liquid from the first and/or second cooling heat exchanger is fed back into the upper region of the cooling liquid buffer tank via the further hollow profile body.

In this manner, the cooling liquid buffer tank can also be efficiently operated as layered buffer tank upon unloading. With such layered liquid buffer tank a stable long-term operation of the heat pump at high COP is enabled.

Independently, another embodiment of the method may comprise, that based on cooling demand for the first and second pasteurizing lines, the process liquids with a low temperature level of the first and/or the second pasteurizing lines are cooled further by means of at least one additional cooling device.

Through this measure, eventual cooling demand peaks or the need for exceptional low temperature levels for the process liquid in any of the pasteurizing lines can be covered by the at least one additional cooling device, and a heat pump with suitable cooling capacity may be utilized.

In such case, it may be convenient, that the process liquid(s) with a low temperature level are cooled further by conveying them through a heat exchanger of at least one air-cooled cooling tower.

Herewith, the process liquid(s) can be cooled further by means of an additional cooling device with high cooling capacity. By means of the heat exchanger, a contamination/pollution of the process liquid(s) during further cooling, as for example potentially caused by direct contact with cooling air, can efficiently be prevented.

In addition, an enhanced pasteurizing plant is also provided to achieve the objective of the present invention.

The pasteurizing plant comprises a first pasteurizing line and at least a second pasteurizing line. Each of the first and the second pasteurizing lines comprise at least one heating zone and at least one cooling zone, the heating zones and the cooling zones each comprising irrigation means configured for dispensing a temperature controlled process liquid into the respective zones. Each of the first and the second pasteurizing lines comprise a transporting means configured for transporting sealed containers filled with foodstuff through the at least one respective heating zone and subsequently through the at least one respective cooling zone. The pasteurizing plant further comprises a heat pump with a heating means for heating a heating liquid and a cooling means for cooling a cooling liquid.

The heating means of the heat pump at least is operatively connected with a primary side of a first heating heat exchanger via liquid transport lines and at least one shut-off means arranged between solely the heating means and the first heating heat exchanger, and the heating means is additionally operatively connected with a primary side of a second heating heat exchanger via liquid transport lines and at least one further shut-off means arranged between solely the heating means and the second heating heat exchanger. At least one heating liquid conveying means is arranged for circulating the heating liquid through the heating means, and through the primary side of the first heating heat exchanger and/or through the primary side of the second heating heat exchanger. A secondary side of the first heating heat exchanger is connected with an input line and an output line for process liquid of the first pasteurizing line, and a secondary side of the second heating heat exchanger is connected with an input line and an output line for process liquid of the second pasteurizing line.

In addition, the cooling means of the heat pump at least is operatively connected with a primary side of a first cooling heat exchanger via liquid transport lines and at least one shut-off means arranged between solely the cooling means and the first cooling heat exchanger, and the cooling means is additionally operatively connected with a primary side of a second cooling heat exchanger via liquid transport lines and at least one shut-off means arranged between solely the cooling means and the second cooling heat exchanger. At least one cooling liquid conveying means is arranged for circulating the cooling liquid through the cooling means, and through the primary side of the first cooling heat exchanger and/or through the primary side of the second cooling heat exchanger. A secondary side of the first cooling heat exchanger is connected with an input line and an output line for process liquid of the first pasteurizing line, and a secondary side of the second cooling heat exchanger is connected with an input line and an output line for process liquid of the second pasteurizing line.

Through this structural design of the pasteurization plant, in operation of the plant the heating liquid can be heated by way of the heating means of the heat pump. Further on, the heated heating liquid can then be used to heat process liquid with a high temperature level of the first pasteurizing line by means of the first heating heat exchanger, and/or the heated heating liquid from the heating means of the heat pump can be used to heat process liquid with a high temperature level of the second pasteurizing line by means of the second heating heat exchanger, based on actual heating demand of the pasteurizing lines. Additionally, the cooling liquid can be cooled down in the cooling means of the heat pump in operation of the pasteurizing plant, and can then be used to cool process liquid with a low temperature level of the first pasteurizing line by means of the first cooling heat exchanger, and/or can be used to cool process liquid with a low temperature level of the second pasteurizing line by means of the second cooling heat exchanger, based on actual cooling demand of the pasteurizing lines.

This allows for enhanced energy efficiency during operation of the pasteurizing plant, as the heating capacity as well as the cooling capacity of the heat pump can be exploited to a very high extend. This allows for operation of the heat pump in a region of a very high COP for heating and cooling. For determination of the actual heating and cooling demands of the pasteurizing lines during operation, temperature sensors can be arranged at suitable positions in the pasteurizing lines. A person skilled in the art will appreciate, that the pasteurizing plant may of course comprise more than two pasteurizing lines. For example, a third pasteurizing line, a fourth pasteurizing line and so on, may be linked to the heat pump by third and fourth heating and cooling heat exchangers, in the same way as the first and the second pasteurizing lines.

An embodiment of the pasteurizing plant may comprise, that an output of the heating means is connected with an upper region of a heating liquid buffer tank via liquid transport lines and at least one shut-off means arranged between solely the output of the heating means and the upper region of the heating liquid buffer tank, and an input of the heating means is connected with a lower region of the heating liquid buffer tank via liquid transport lines and at least one shut-off means arranged between solely the input of the heating means and the lower region of the heating liquid buffer tank, and that separately at other positions of the heating liquid buffer tank an upper region and a lower region of the heating liquid buffer tank are operatively connected with the primary side of the first heating heat exchanger via liquid transport lines and at least one further shut-off means arranged between solely the heating liquid buffer tank and the first heating heat exchanger, and the upper region and the lower region of the heating liquid buffer tank are also operatively connected with the primary side of the second heating heat exchanger via liquid transport lines and at least one further shut-off means arranged between solely the heating liquid buffer tank the second heating heat exchanger, wherein at least one further heating liquid conveying means is arranged for conveying the heating liquid from the upper region of the heating liquid buffer tank through the primary side of the first heating heat exchanger and/or through the primary side of the second heating heat exchanger, and back into the lower region of the heating liquid buffer tank from the first heating heat exchanger and/or the from the second heating heat exchanger.

During operation of the pasteurizing plant and dependent on actual heating demand for the pasteurizing lines, heated heating liquid from the heating means of the heat pump can be fed into an upper region of a heating liquid buffer tank, and heating liquid can be fed back into the heating means of the heat pump from a lower region of the heating liquid buffer tank. The heating liquid buffer tank therefore particularly helps in case of low or no heating demand in the pasteurizing lines, as in this way excess thermal energy generated in the heating means of the heat pump can temporarily be stored in the heating liquid buffer tank for later use. The heating liquid buffer tank may preferably be configured as layered storage tank, with temperature sensors arranged at various heights within the heating liquid buffer tank. Based on heating demand for the first and second pasteurizing lines during operation of the pasteurizing plant, heating liquid can then be fed into the first heating heat exchanger and/or the second heat exchanger from the upper region of the heating liquid buffer tank, and the heating liquid from the first heat exchanger and/or from the second heat exchanger can be fed back into the lower region of the heating liquid buffer tank during operation. By way of using the heating liquid buffer tank in such manner, the heating capacity of the heat pump can be exploited to a higher extend, and the use of additional heating means with lower energy efficiency as compared to the heat pump can at least be restricted during operation of the pasteurizing plant.

Another embodiment may comprise, that the liquid transport lines leading from the output of the heating means to the upper region of the heating liquid buffer tank are connected to a hollow profile body with openings within a section of its circumferential surface, which hollow profile body is arranged within the upper region of the heating liquid buffer tank such that all openings face towards an upper end of the heating liquid buffer tank, and that the liquid transport lines leading from the lower region of the heating liquid buffer tank to the input of the heating means are connected to a further hollow profile body with openings within a section of its circumferential surface, which further hollow profile body is arranged within the lower region of the heating liquid buffer tank such that all openings face towards a lower end of the heating liquid buffer tank.

By way of these constructive elements, the heating liquid buffer tank can be operated as layered buffer tank during operation of the pasteurizing plant. Upon loading, heated heating liquid from the heating means can be fed into the heating liquid buffer tank via the hollow profile body arranged within the upper region. The hollow profile body can for example be arranged approximately in the middle of the upper third of the heating liquid buffer tank. The hollow profile body thereby acts as guiding means and the heating liquid with high temperature level from the heating means of the heat pump is pushed towards the upper end of the heating liquid buffer tank upon feeding. Thereby, layers of heating liquid with moderate temperature level are displaced towards lower regions of the heating liquid buffer tank. Heating liquid with comparatively low temperature level from the lower region of the heating liquid buffer tank can be fed back into the heating means via the further hollow profile body arranged within the lower region of the heating liquid buffer tank during operation of the pasteurizing plant. This further hollow profile body can for example be arranged approximately in the middle of the lower third of the heating liquid buffer tank. Through the hollow profile bodies, an undesirable mixing of heating liquid layers with different temperature levels in the heating liquid buffer tank can be impeded during operation of the pasteurizing plant. In the following, this allows for operation of the heat pump at best possible COP for heating, as stable temperature levels of the heating liquid in the upper and lower regions of the heating liquid buffer tank can be provided for a long time while loading the heating liquid buffer tank with thermal energy.

Furthermore, it may be advantageous, that the liquid transport lines leading from the upper region of the heating liquid buffer tank to the first heating heat exchanger and the liquid transport lines leading from the upper region of the heating liquid buffer tank to the second heating heat exchanger are connected to the hollow profile body arranged within the upper region of the heating liquid buffer tank, and that the liquid transport lines leading from the first heating heat exchanger and the liquid transport lines leading from the second heating heat exchanger to the lower region of the heating liquid buffer tank are connected to the hollow profile body arranged within the lower region of the heating liquid buffer tank.

During operation of the pasteurizing plant and based on heating demand for the first and second pasteurizing lines, and based on temperatures of the heating liquid in the heating liquid buffer tank, the heating liquid from the upper region of the heating liquid buffer tank can be fed into the first heating heat exchanger and/or the second heating heat exchanger via the hollow profile body, and heating liquid from the first and/or second heating heat exchanger can be fed back into the lower region of the heating liquid buffer tank via the further hollow profile body. This also enables efficient operation of the heating liquid buffer tank as layered buffer tank upon unloading.

Independently, an embodiment of the pasteurizing plant may comprise, that an output of the cooling means is connected with lower region of a cooling liquid buffer tank via liquid transport lines and at least one shut-off means arranged between solely the output of the cooling means and the lower region of the cooling liquid buffer tank, and an input of the cooling means is connected with an upper region of the cooling liquid buffer tank via liquid transport lines and at least one shut-off means arranged between solely the input of the cooling means and the upper region of the cooling liquid buffer tank, and that separately at other positions of the cooling liquid buffer tank a lower region and an upper region of the cooling buffer tank are operatively connected with the primary side of the first cooling heat exchanger via liquid transport lines and at least one further shut-off means arranged between solely the cooling liquid buffer tank and the first cooling heat exchanger, and the lower region and the upper region of the cooling buffer tank are also operatively connected with the primary side of the second cooling heat exchanger via liquid transport lines and at least one further shut-off means arranged between solely the cooling liquid buffer tank and the second cooling heat exchanger, wherein at least one further cooling liquid conveying means is arranged for conveying the cooling liquid from the lower region of the cooling liquid buffer tank through the primary side of the first cooling heat exchanger and/or through the primary side of the second cooling heat exchanger, and back into the upper region of the cooling liquid buffer tank.

Based or dependent on actual cooling demand for the pasteurizing lines during operation of the pasteurizing plant, cooled cooling liquid from the cooling means of the heat pump can be fed into a lower region of a cooling liquid buffer tank, and cooling liquid can be fed back into the cooling means of the heat pump from an upper region of the cooling liquid buffer tank. The cooling liquid buffer tank therefore may serve as temporary storage device for cooled cooling liquid with low temperature level during operation, and the cooling capacity of the heat pump can be used fully even if low or no cooling demand exists in any of the pasteurizing lines. The cooling liquid buffer tank may preferably be configured as layered storage tank, with temperature sensors arranged at various heights within the heating liquid buffer tank. In dependence of cooling demand for the first and second pasteurizing lines during operation, cooling liquid can then be fed into the first cooling heat exchanger and/or the second cooling heat exchanger from the lower region of the cooling liquid buffer tank in order to cool the process liquid with a low temperature level of the first pasteurizing line and/or the second pasteurizing line, and cooling liquid from the first cooling heat exchanger and/or from the second cooling heat exchanger can be fed back into the upper region of the cooling liquid buffer tank. By way of using the cooling liquid buffer tank in such manner, the cooling capacity of the heat pump can be exploited to a higher extend, and the use of additional cooling means with lower energy efficiency as compared to the heat pump can at least be restricted during operation of the pasteurizing plant.

Another embodiment of the pasteurizing plant may comprise, that the liquid transport lines leading from the output of the cooling means to the lower region of the cooling liquid buffer tank are connected to a hollow profile body with openings within a section of its circumferential surface, which hollow profile body is arranged within the lower region of the cooling liquid buffer tank such that all openings face towards a lower end of the cooling liquid buffer tank, and that the liquid transport lines leading from the upper region of the cooling liquid buffer tank to the input of the cooling means are connected to a further hollow profile body with openings within a section of its circumferential surface, which further hollow profile body is arranged within the upper region of the cooling liquid buffer tank such that all openings face towards an upper end of the cooling liquid buffer tank.

Through using these constructive elements, the cooling liquid buffer tank can also be operated as layered buffer tank during operation of the pasteurizing plant. Upon loading, cooled cooling liquid from the cooling means of the heat pump can be fed into the cooling liquid buffer tank via the hollow profile body arranged within the lower region. The hollow profile body can for example be arranged approximately in the middle of the lower third of the cooling liquid buffer tank. The hollow profile body thereby acts as guiding means and the cooling liquid with low temperature level from the cooling means is pushed towards the lower end of the cooling liquid buffer tank upon feeding. Thereby, layers of cooling liquid with moderate temperature level are displaced towards upper regions of the cooling liquid buffer tank. Cooling liquid with comparatively high temperature level from the upper region of the cooling liquid buffer tank can be fed back into the cooling means via the further hollow profile body arranged within the upper region of the cooling liquid buffer tank during operation of the pasteurizing plant. This further hollow profile body can for example be arranged approximately in the middle of the upper third of the cooling liquid buffer tank. Through the hollow profile bodies, an undesirable mixing of cooling liquid layers with different temperature levels in the cooling liquid buffer tank can be impeded during operation of the pasteurizing plant. In the following, this allows for operation of the heat pump at best possible COP for cooling, as stable temperature levels of the cooling liquid in the lower and upper regions of the cooling liquid buffer tank can be provided for a long time while loading the cooling liquid buffer tank.

Furthermore, it may be convenient, when the liquid transport lines leading from the lower region of the cooling liquid buffer tank to the first cooling heat exchanger and the liquid transport lines leading from the lower region of the cooling liquid buffer tank to the second cooling heat exchanger are connected to the hollow profile body arranged within the lower region of the cooling liquid buffer tank, and that the liquid transport lines leading from the first cooling heat exchanger and the liquid transport lines leading from the second cooling heat exchanger to the upper region of the cooling liquid buffer tank are connected to the hollow profile body arranged within the upper region of the cooling liquid buffer tank.

Based on cooling demand for the first and second pasteurizing lines, and based on temperatures of the cooling liquid in the cooling liquid buffer tank, the cooling liquid from the lower region of the cooling liquid buffer tank can then be fed into the first cooling heat exchanger and/or the second cooling heat exchanger via the hollow profile body, and cooling liquid from the first and/or second cooling heat exchanger can be fed back into the upper region of the cooling liquid buffer tank via the further hollow profile body. This also enables efficient operation of the cooling liquid buffer tank as layered buffer tank upon unloading.

Independently, an embodiment of the pasteurizing plant may comprise at least one additional cooling device for further cooling the process liquids with a low temperature level of the first and/or the second pasteurizing lines.

During operation of the pasteurizing plant and based on cooling demand for the first and second pasteurizing lines during operation, the at least one additional cooling device can be used to further cool the process liquids with a low temperature level of the first and/or the second pasteurizing lines, thereby covering cooling demand peaks or the need for exceptional low temperature levels for the process liquid in any of the pasteurizing lines.

In such case the at least one additional cooling device may be an air-cooled cooling tower with a heat exchanger for conveying through the process liquid(s).

During operation of the pasteurizing plant, the process liquid(s) can then be cooled further by means of an additional cooling device with high cooling capacity. By means of the heat exchanger, a contamination/pollution of the process liquid(s) caused by the cooling air can effectively be prevented during operation.

To provide a better understanding, the invention is described in more detail in the following with reference to the appended figures.

These are highly simplified, schematic drawings illustrating the following:
- Fig. 1: an embodiment of a pasteurizing plant;
- Fig. 2: another embodiment of a pasteurizing plant.

Introductory, it should be pointed out, that the same parts described in the different embodiments are denoted by the same reference numbers and the same component names and the disclosures made throughout the description can be transposed in terms of meaning to same parts bearing the same reference numbers or same component names. Furthermore, the positions chosen for the purposes of the description, such as top, bottom, side, etc., relate to the drawing specifically being described and can be transposed in terms of meaning to a new position when another position is being described.

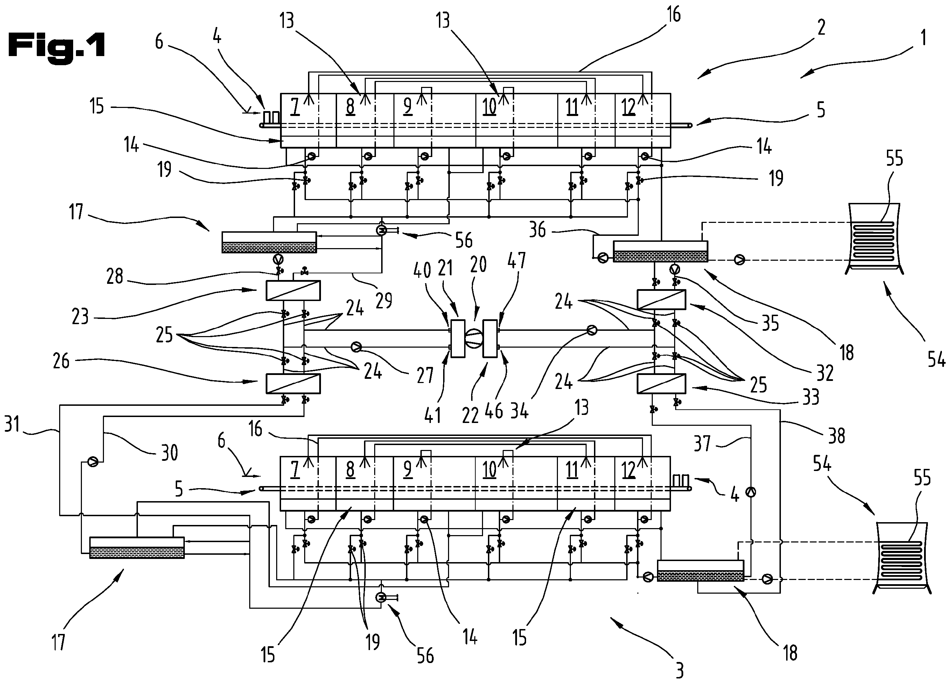

Fig.1 schematically shows an embodiment of a pasteurizing plant 1, with a first pasteurizing line 2 and a second pasteurizing line 3. In the exemplary embodiment shown in Fig. 1, the first and second pasteurizing lines 2, 3 are configured as so-called tunnel pasteurizers. Each of the pasteurizing lines 2, 3 comprises a transporting means 5, for example a conveyor belt or other transporting device, configured for transporting containers 4. In a transporting direction 6 for the containers 4, each of the first and second pasteurizing lines 2, 3 may comprise heating zones 7, 8 for successively heating up the containers and the foodstuff, further heating zones 9, 10 for further heating up and pasteurizing the foodstuff, and cooling zones 11, 12 for successively cooling down the containers 4 and the foodstuff. In operation of each of the first and second pasteurization lines 2, 3, sealed containers 4 filled with foodstuff, for example beverages, can then be conveyed through the heating and pasteurizing zones 7, 8, 9, 10 and subsequently through the cooling zones 11, 12.

The first and second pasteurizing lines 2, 3 schematically shown in Fig. 1 comprise identical elements. Depending on need or purpose, it is of course possible for a pasteurizing line to comprise more or fewer zones as compared to the exemplary embodiment shown in Fig. 1 for example. A pasteurizing line 2, 3 hereby comprises at least one heating zone 7, 8, 9, 10 and at least one cooling zone 11, 12, through which the containers are conveyed. It is likewise possible for further treatment zones to be provided. For example, a zone for drying the outer side of the containers 4 could be provided subsequently for the cooling zone 12 arranged in the transport direction 6 at the end. For reasons of clarity, such alternative designs of pasteurizing lines are not described. A person skilled in the art will appreciate, that the present invention can be executed with such alternative designs of pasteurizing lines.

During operation, the foodstuff can independently be heated in the respective heating zones 7, 8, 9, 10 of each of the first and second pasteurizing lines 2, 3, by dispensing a temperature-controlled process liquid onto the respective containers 4 in each of the respective heating zones 7, 8, 9, 10. The foodstuff subsequently can independently be cooled in the respective cooling zones 11, 12 of each of the first and second pasteurizing lines 2, 3, by dispensing a temperature-controlled process liquid onto the respective containers 4 in each of the respective cooling zones 11, 12. For this purpose, the temperature treatment zones 7, 8, 9, 10, 11, 12, may be equipped with irrigation means 13, for example sprinkler or shower devices known in the art, configured for dispensing a temperature-controlled process liquid onto the containers 6. In the embodiment shown in Fig. 1, temperature-controlled process liquid can be fed to the irrigations means 13 of the temperature treatment zones 7, 8, 9, 10, 11, 12 of each of the first and second pasteurizing line 2, 3, by means of liquid conveying devices 14, for example circulation pumps.

After crossing the respective temperature treatment zones 7, 8, 9, 10, 11, 12, the process liquid may be collected at bottom areas 15 of the treatment zones 7, 8, 9, 10, 11, 12, and may preferably be reused within the respective pasteurizing lines 2, 3. Portions of process liquid from the bottom areas 15 may be conveyed to other temperature treatment zones 7, 8, 9, 10, 11, 12 via recuperation lines 16. In each of the pasteurizing lines 2, 3, a portion of the process liquid from the bottom area of the last cooling zone 12 may for example be transferred to the first heating zone 7, and vice versa. Such recuperation of process liquid is particular meaningful, as the temperature of the process liquid falls upon heating up the containers 4 in the heating zones 7, and rises upon cooling down the containers 4 in the cooling zones 12. Therefore, direct reuse of those process liquids for heating and cooling of the containers 4 is expedient, at least with the exemplary pasteurizing lines 2, 3 shown in Fig. 1.

Portions of process liquid with comparatively high temperature level collected at the bottom areas 15, may be transferred to respective hot collection tanks 17 of the pasteurizing lines 2, 3 for example. Portions of process liquid with comparatively low temperature level collected at the bottom areas 15, may be transferred to respective cold collection tanks 18. The process liquids in the hot and cold collection tanks 17, 18 may be used to set or adjust respective temperatures for process liquid to be fed into the individual temperature treatment zones 7, 8, 9, 10, 11, 12. For this purpose, each of the conveying devices 14 on the input side may be connected with the hot and cold collection tanks 17, 18 via metering devices 19, as shown in the embodiment according to Fig. 1. In this way, process liquid from the respective hot and cold collection tanks 17, 18 may be used for or added to a process liquid flow to be fed into one of the individual, respective temperature treatment zones 7, 8, 9, 10, 11, 12 of the pasteurizing lines 2, 3, in a controlled manner.

In order to enable gentle pre-heating of the foodstuff in the containers 4, process liquid with a temperature of approximately 35 °C may for example be fed into heating zones 7 of the first and second pasteurizing lines 2, 3. For further heating up the foodstuff, process liquid with a temperature of approximately 55 °C may for example be fed into heating zones 8. For further heating up and effective pasteurization of the foodstuff in the containers 4, process liquid with a temperature of approximately 85 °C or higher may for example be fed into the respective heating zones 9, 10. For the purpose of cooling down the foodstuff in the containers in a controlled manner, process liquid with a temperature level of approximately 50 °C may be fed into cooling zones 11, and process liquid with an approximate temperature of 30 °C may be fed into the respective cooling zones 12 of the pasteurizing lines 2, 3. The required temperature levels for the individual, respective temperature treatment zones 7, 8, 9, 10, 11, 12, may however vary widely, for example in dependence of the foodstuff to be pasteurized. Certain foodstuff may require particular high pasteurizing temperatures, while foodstuff comprising temperature sensitive ingredients may require cooling down to particular low temperature levels after pasteurization for example.

By using recuperation of process liquid, and by using the metering devices 19, the temperature of individual process liquid flows can be set and/or adjusted for the respective, individual temperature treatment zones 7, 8, 9, 10, 11, 12. Due to the mixing of process liquid flows and internal transfer of thermal energy, as well as exchange of thermal energy with the environment however, heating and cooling means are still required to bring partial quantities and/or flows of the process liquids in the first and second pasteurizing lines 2, 3 to temperature levels, which are suited for effective heating and cooling of the foodstuff in the respective containers 4.

For this purpose, the pasteurizing plant 1 comprises a heat pump 20 with a heating means 21 for heating a heating liquid and a cooling means 22 for cooling a cooling liquid. The heat pump 20 may for example be a conventional mechanical heat pump, driven by a compressor. In such case, the heating means 21 may be a condenser of the heat pump 20, and the cooling means 22 may be an evaporator of the heat pump 20. As is known in the art, such heat pump 20 may be used to extract thermal energy from the cooling liquid in the cooling means 22, and may be used to supply thermal energy to the heating liquid in the heating means 21.

As shown in Fig. 1, the heating means 21 of the heat pump 20 at least is operatively connected with a primary side of a first heating heat exchanger 23 via liquid transport lines 24 and at least one shut-off means 25 arranged between solely the heating means 21 and the first heating heat exchanger 23. The first heating heat exchanger 23 is assigned to the first pasteurizing line 2. The heating means 21 is additionally operatively connected with a primary side of a second heating heat exchanger 26 via liquid transport lines 24 and at least one shut-off means 25 arranged between solely the heating means 21 and the second heating heat exchanger 26. The second heating heat exchanger 26 is assigned to the second pasteurizing line 3. At least one heating liquid conveying means 27 is arranged for circulating the heating liquid through the heating means 21, and through the primary side of the first heating heat exchanger 23 and/or through the primary side of the second heating heat exchanger 26. A secondary side of the first heating heat exchanger 23 is connected with an input line 28 and an output line 29 for process liquid of the first pasteurizing line 2, and a secondary side of the second heating heat exchanger 26 is connected with an input line 30 and an output line 31 for process liquid of the second pasteurizing line 3.

In addition, the cooling means 22 of the heat pump 20 at least is operatively connected with a primary side of a first cooling heat exchanger 32 via liquid transport lines 24 and at least one shut-off means 25 arranged between solely the cooling means 22 and the first cooling heat exchanger 32. The first cooling heat exchanger 32 is assigned to the first pasteurizing line 2. The cooling means 22 is additionally operatively connected with a primary side of a second cooling heat exchanger 33 via liquid transport lines 24 and at least one shut-off means 25 arranged between solely the cooling means 22 and the second cooling heat exchanger 33. The second cooling heat exchanger 33 is assigned to the second pasteurizing line 3. At least one cooling liquid conveying means 34 is arranged for circulating the cooling liquid through the cooling means 22, and through the primary side of the first cooling heat exchanger 32 and/or through the primary side of the second cooling heat exchanger 33. A secondary side of the first cooling heat exchanger 32 is connected with an input line 35 and an output line 36 for process liquid of the first pasteurizing line 2, and a secondary side of the second cooling heat exchanger 33 is connected with an input line 37 and an output line 38 for process liquid of the second pasteurizing line 3.

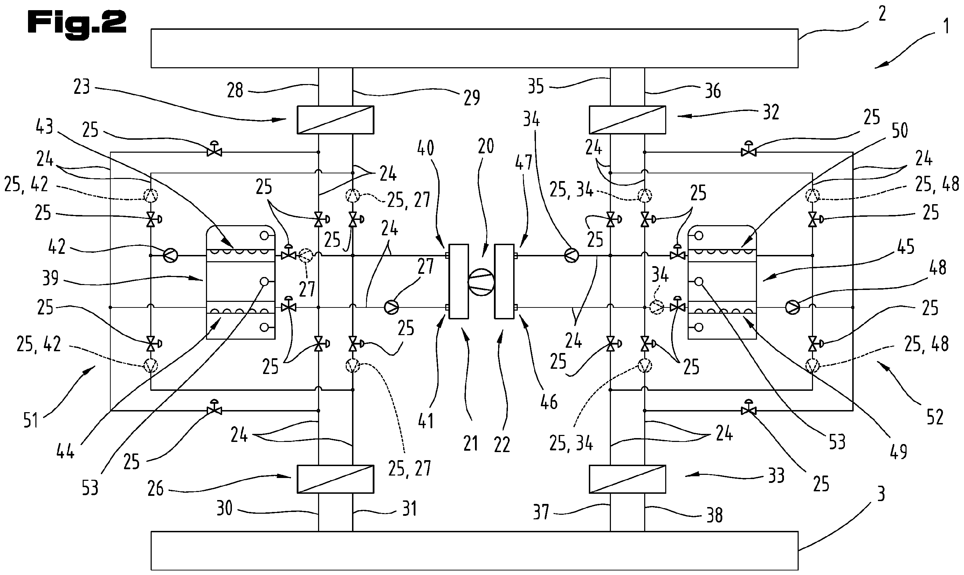

Some further embodiments of the invention are depicted in Fig.2, and are described with reference to Fig. 2 in the following. Fig. 2 shows parts of a pasteurizing plant 1 comprising a first pasteurizing line 2 and a second pasteurizing line 3, as also shown in the embodiment depicted in Fig. 1. For improving clarity however, the first and second pasteurizing lines 2, 3 are drawn in a very simplified manner in Fig. 2. For a possible design of such pasteurizing lines 2, 3, reference is made to Fig. 1 and the description referring to Fig. 1.

As depicted in Fig. 2, the pasteurizing plant 1 may further comprise a heating liquid buffer tank 39. An output 40 of the heating means 21 of the heat pump 20 may be connected with an upper region of the heating liquid buffer 39 tank via liquid transport lines 24 and at least one shut-off means 25 arranged between solely the output 40 of the heating means 21 and the upper region of the heating liquid buffer 39 tank. An input 41 of the heating means 21 may be connected with a lower region of the heating liquid buffer tank 39 via liquid transport lines 24 and at least one shut-off means 25 arranged between solely the input 41 of the heating means 21 and the lower region of the heating liquid buffer tank 39.

Separately at other positions of the heating liquid buffer tank 39 an upper region and a lower region of the heating liquid buffer tank 39 may be operatively connected with the primary side of the first heating heat exchanger 23 via liquid transport lines 24 and at least one further shut-off means 25 arranged between solely the heating liquid buffer tank 39 and the first heating heat exchanger 23, and the upper region and a lower region of the heating liquid buffer tank 39 may also be operatively connected with the primary side of the second heating heat exchanger 26 via liquid transport lines 24 and at least one further shut-off means 25 arranged between solely the heating liquid buffer tank 39 and the second heating heat exchanger 26. At least one further heating liquid conveying means 42 may be arranged for conveying the heating liquid from the upper region of the heating liquid buffer tank 39 through the primary side of the first heating heat exchanger 23 and/or through the primary side of the second heating heat exchanger 26, and back into the lower region of the heating liquid buffer tank 39 from the first heating heat exchanger 23 and/or the from the second heating heat exchanger 26.

The heating liquid conveying means 27 arranged for conveying the heating liquid through the primary side of the first heating heat exchanger 23 and/or through the primary side of the second heating heat exchanger 26, may also be arranged for circulating the heating liquid between the heating means 21 of the heat pump 20 and the heating liquid buffer tank 39 as shown in Fig. 2. Alternatively, a further conveying means may be arranged for this purpose. The heating liquid buffer tank 39 may preferably be configured as layered storage tank, with temperature sensors 53 arranged at various heights within the heating liquid buffer tank for temperature monitoring, as depicted in Fig. 2.

In a preferred embodiment, the liquid transport lines 24 leading from the output 40 of the heating means 21 of the heat pump 20 to the upper region of the heating liquid buffer tank 39 may be connected to a hollow profile body 43 with openings within a section of its circumferential surface. As depicted in Fig. 2, the hollow profile body 43 may be arranged within the upper region of the heating liquid buffer tank 39 such that all openings face towards an upper end of the heating liquid buffer tank 39. The liquid transport lines 24 leading from the lower region of the heating liquid buffer tank 39 to the input 41 of the heating means 21 may be connected to a further hollow profile body 44 with openings within a section of its circumferential surface. The further hollow profile body 44 may be arranged within the lower region of the heating liquid buffer tank 39 such that all openings face towards a lower end of the heating liquid buffer tank 39. The hollow profile body 43 may for example be arranged within the upper third of the heating liquid buffer tank 39, and the further hollow profile body 44 may be arranged within the lower third of the heating liquid buffer tank 39.

As can be further seen from the embodiment shown in Fig. 2, the liquid transport lines 24 leading from the upper region of the heating liquid buffer tank 39 to the first heating heat exchanger 23 and the liquid transport lines 24 leading from the upper region of the heating liquid buffer tank 39 to the second heating heat exchanger 26 may also be connected to the hollow profile body 43 arranged within the upper region of the heating liquid buffer tank 39, at a position separate from the position, where the liquid transport lines 24 leading from the output 40 of the heating means 21 to the upper region of the heating liquid buffer tank 39 are connected to the hollow profile body 43. The liquid transport lines 24 leading from the first heating heat exchanger 23 and the liquid transport lines 24 leading from the second heating heat exchanger 26 to the lower region of the heating liquid buffer tank 39 may also be connected to the hollow profile body 44 arranged within the lower region of the heating liquid buffer tank 39, at a position separate from the position, where the liquid transport lines 24 leading from the lower region of the heating liquid buffer tank 39 to the input 41 of the heating means 21 are connected to the hollow profile body 44.

The pasteurizing plant 1 may further comprise a cooling liquid buffer tank 45, as shown for the embodiment depicted in Fig. 2. An output 46 of the cooling means 22 may be connected with a lower region of a cooling liquid buffer tank 45 via liquid transport lines 24 and at least one shut-off means 25 arranged between solely the output 46 of the cooling means 22 and the lower region of the cooling liquid buffer tank 45. An input 47 of the cooling means 22 may be connected with an upper region of the cooling liquid buffer tank 45 via liquid transport lines 24 and at least one shut-off means 25 arranged between solely the input 47 of the cooling means 22 and the upper region of the cooling liquid buffer tank 45.

Separately at other positions of the cooling liquid buffer tank 45, a lower region and an upper region of the cooling buffer tank 45 may be operatively connected with the primary side of the first cooling heat exchanger 32 via liquid transport lines 24 and at least one further shut-off means 25 arranged between solely the cooling liquid buffer tank 45 and the first cooling heat exchanger 32, and the lower region and the upper region of the cooling buffer tank 45 may also be operatively connected with the primary side of the second cooling heat exchanger 33 via liquid transport lines 24 and at least one further shut-off means 25 arranged between solely the cooling liquid buffer tank 45 and the second cooling heat exchanger 33. At least one further cooling liquid conveying means 48 may be arranged for conveying the cooling liquid from the lower region of the cooling liquid buffer tank 45 through the primary side of the first cooling heat exchanger 32 and/or through the primary side of the second cooling heat exchanger 33, and back into the upper region of the cooling liquid buffer tank 45.

The cooling liquid conveying means 34 arranged for conveying the heating liquid through the primary side of the first cooling heat exchanger 32 and/or through the primary side of the second cooling heat exchanger 33, may also be arranged for circulating the cooling liquid between the cooling means 22 of the heat pump 20 and the cooling liquid buffer tank 45 as shown in Fig. 2. Alternatively, a further conveying means may be arranged for this purpose. Like the heating liquid buffer tank 39, the cooling liquid buffer tank 45 may also be configured as layered storage tank, with temperature sensors 53 arranged at various heights within the cooling liquid buffer tank 45 for temperature monitoring, as depicted in Fig. 2.

Preferably, the liquid transport lines 24 leading from the output 46 of the cooling means 22 to the lower region of the cooling liquid buffer tank 45 may be connected to a hollow profile body 49 with openings within a section of its circumferential surface. The hollow profile body 49 may be arranged within the lower region of the cooling liquid buffer tank 45 such that all openings face towards a lower end of the cooling liquid buffer tank 45. The liquid transport lines 24 leading from the upper region of the cooling liquid buffer tank 45 to the input 47 of the cooling means 22 may be connected to a further hollow profile body 50 with openings within a section of its circumferential surface. The further hollow profile body 50 may be arranged within the upper region of the cooling liquid buffer tank 45 such that all openings face towards an upper end of the cooling liquid buffer tank 45. The hollow profile body 49 may for example be arranged within the lower third of the cooling liquid buffer tank 45, and the further hollow profile body 50 may be arranged within the upper third of the cooling liquid buffer tank 45.

In addition, the liquid transport lines 24 leading from the lower region of the cooling liquid buffer tank 45 to the first cooling heat exchanger 32 and the liquid transport lines 24 leading from the lower region of the cooling liquid buffer tank 45 to the second cooling heat exchanger 33 may also be connected to the hollow profile body 49 arranged within the lower region of the cooling liquid buffer tank 45, at a position separate from the position, where the liquid transport lines 24 leading from the output 46 of the cooling means 22 to the lower region of the cooling liquid buffer tank 45 are connected to the hollow profile body 49. The liquid transport lines 24 leading from the first cooling heat exchanger 32 and the liquid transport lines 24 leading from the second cooling heat exchanger 33 to the upper region of the cooling liquid buffer tank 45 may also be connected to the hollow profile body 50 arranged within the upper region of the cooling liquid buffer tank 45, at a position separate from the position, where the liquid transport lines 24 leading from the upper region of the cooling liquid buffer tank 45 to the input 47 of the cooling means 22 are connected to the hollow profile body 50.

As can be seen from Fig. 2, the heating means 21 of the heat pump, the first heating heat exchanger 23, the second heating heat exchanger 26, and the heating liquid buffer tank 39 are elements of a heating circuit 51. During operation, the shut-off means 25 arranged between distinct elements 21, 23, 26, 39 can be opened, to operatively connect elements 21, 23, 26, 39 with one another. The cooling means 22 of the heat pump 20, the first cooling heat exchanger 32, the second cooling heat exchanger 3 and the cooling liquid buffer tank 45 are elements of a cooling circuit 52. As in the heating circuit 51, the shut-off means 25 arranged between distinct elements 22, 32, 33, 45 of the cooling circuit 52 can likewise be opened during operation, to operatively connect distinct elements 22, 32, 33, 45 in the cooling circuit 52 with one another.

The shut-off means 25 arranged within the heating circuit 51 and the cooling circuit 52 may for example be open/close valves, or the like. In open position of such shut-off means 25, distinct elements 21, 23, 26, 39 of the heating circuit 51 can be set in operative flow connection to each other respectively, such that heating liquid may be circulated between elements in flow connection, by driving the corresponding conveying means 27, 42 of the heating circuit 51. Likewise, distinct elements 22, 32, 33, 45 of the cooling circuit 52 can be set in operative flow connection to each other, by opening the corresponding shut-off means 25. By driving the conveying means 34, 48 of the cooling circuit 52 cooling liquid may be circulated between elements in flow connection. The shut-off means 25 may alternatively be metering devices, like flow control valves for example. By arranging such metering devices, volumetric flow rates of the heating liquid and the cooling liquid respectively, circulated between elements 21, 23, 26, 39 in flow connection in the heating circuit 51 and elements 22, 32, 33, 45 in flow connection in the cooling circuit 52 respectively, can be controlled.

Alternatively, the shut-off means 25 may also be separate conveying means 27, 34, 42, 48 for circulating the heating liquid and the cooling liquid respectively between distinct elements 21, 23, 26, 39 of the heating circuit 51, and between distinct elements 22, 32, 33, 45 of the cooling circuit 52. Such alternative embodiment is illustrated in Fig. 2 by way of the elements drawn in dashed lines. By means of the conveying means 27, 34, 42, 48 drawn in dashed lines, distinct elements 21, 23, 26, 39 of the heating circuit 51 and distinct elements 22, 32, 33, 45 of the cooling circuit 52 can be operatively connected or shut-off from each other. In case of such alternative embodiment, the shut-off means 25 and conveying means 27, 34, 42, 48 drawn in and designated with solid lines in Fig. 2, may of course be omitted. Irrespective of the number of conveying means being arranged in the heating circuit 51 and the cooling circuit 52, the conveying means 27, 34, 42, 48 preferably are flow control devices, such as pumps equipped with frequency converters.

During operation of the pasteurizing plant 1, the heating liquid may be heated by means of the heating means 21 of the heat pump 20, and the cooling liquid may be cooled by means of the cooling means 22 of the heat pump 20. With the embodiments of the pasteurizing plant 1 shown in Fig. 1 and Fig. 2, and described above, the heated heating liquid and the cooled cooling liquid may advantageously be used for heating and cooling the process liquids of the first and second pasteurizing line 2, 3 with high flexibility, based on or dependent on actual heating demand and cooling demand within the first pasteurizing line 2 and the second pasteurizing line 3.

Based on the heating demand for the first and second pasteurizing lines 2, 3, the heated heating liquid from the heating means 21 of the heat pump 20 may be used to heat process liquid with a high temperature level of the first pasteurizing line 2 by means of a first heating heat exchanger 23. Additionally, or alternatively, the heated heating liquid from the heating means 21 of the heat pump 20 may be used to heat process liquid with a high temperature level of the second pasteurizing line 3 by means of a second heating heat exchanger 26.

Based on cooling demand for the first and second pasteurizing lines 2, 3, the cooled cooling liquid from the cooling means 22 of the heat pump 20 may be used to cool process liquid with a low temperature level of the first pasteurizing line 2 by means of a first cooling heat exchanger 32. Alternatively or additionally, the cooled cooling liquid from the cooling means 22 of the heat pump 20 may be used to cool process liquid with a low temperature level of the second pasteurizing line 3 by means of a second cooling heat exchanger 33.

By way of this method, the energy efficiency of the pasteurizing plant 1 can be significantly enhanced, as the heated heating liquid and the cooled cooling liquid can be used according to the heating and cooling demands of the first and the at least second pasteurizing lines 2, 3 respectively. Thermal energy can even be transferred between the pasteurizing lines 2, 3, for example by cooling process fluid of a pasteurizing line 2, 3 with high actual cooling demand, and transferring the excess thermal energy to a pasteurizing line 2 ,3 with high actual heating demand, by heating its process liquid. Such transfer of thermal energy between pasteurizing lines 2, 3 can be achieved without mixing the process liquids of the pasteurizing lines 2, 3.

For heating the process liquid with a high temperature level of the first and/or the second pasteurizing line 2, 3, the heated heating liquid from the heating means 21 of the heat pump 20 is conveyed through the primary side of the first and/or the second heating heat exchanger 23, 26, while the process liquid of the first and/or the second pasteurizing line 2, 3 is conveyed through the secondary side of the first and/or the second heating heat exchanger 23, 26. For cooling the process liquid with a low temperature level of the first and/or the second pasteurizing line 2, 3, the cooled cooling liquid from the cooling means 22 of the heat pump 20 is conveyed through the primary side of the first and/or the second cooling heat exchanger 32, 33, while the process liquid of the first and/or the second pasteurizing line 2, 3 is conveyed through the secondary side of the first and/or the second cooling heat exchanger 32, 33. The heating liquid is heated by conveying the heating liquid through the heating means 21 of the operated heat pump 20, and the cooling liquid is cooled by circulating the heating liquid through the cooling means 22 of the operated heat pump 21. In this way, the heating liquid may be circulated between the heating means 21, and the first heating heat exchanger 23 and/or the second heating heat exchanger 26, and the cooling liquid may be circulated between the cooling means 22, and the first cooling heat exchanger 32 and/or the second cooling heat exchanger 33.

Based on heating demand for the first and second pasteurizing lines 2, 3, the heated heating liquid from the heating means 21 of the heat pump 20 may be fed into the upper region of the heating liquid buffer tank 39, and heating liquid may be fed back into the heating means 21 of the heat pump 20 from a lower region of the heating liquid buffer tank 39, thus circulating the heating liquid between the heating means 21 and the heating liquid buffer tank 39. Such procedure is advantageous in case of low heating demand in the pasteurizing lines 2, 3, as thermal energy generated in the heating means 21 can temporarily be stored in the heating liquid buffer tank 39 for later use, by rising the overall temperature level of the heating liquid in the heating liquid buffer tank 39.

Based on heating demand for the first and second pasteurizing lines 2, 3, heating liquid may then be fed into the first heating heat exchanger 23 and/or the second heat exchanger 26 from the upper region of the heating liquid buffer tank 39 in order to heat the process liquid with a high temperature level of the first pasteurizing line 2 and/or the second pasteurizing line 3. Heating liquid from the first heat exchanger 23 and/or from the second heat exchanger 26 may be fed back into the lower region of the heating liquid buffer tank 39. Such procedure is of particular advantage, when a high heating demand exists in the first and/or second pasteurizing lines 2, 3.

As depicted in Fig. 2, the heated heating liquid from the heating means 21 may be fed into the heating liquid buffer tank 39 via the hollow profile body 43 arranged within the upper region of the heating liquid buffer tank 39. Heating liquid may be fed back from the heating liquid buffer tank 39 into the heating means 21 via the further hollow profile body 44 arranged within the lower region of the heating liquid buffer tank 39.

Based on heating demand for the first and second pasteurizing lines 2, 3, the heating liquid from the upper region of the heating liquid buffer tank 39 may then be fed into the first heating heat exchanger 23 and/or the second heating heat exchanger 26 via the hollow profile body 43 in the upper region of the heating liquid buffer tank 39, and heating liquid from the first and/or second heating heat exchanger 23, 26 may be fed back into the lower region of the heating liquid buffer tank 39 via the further hollow profile body 44.

By using the hollow profile bodies 43, 44 both for loading and unloading, the heating liquid buffer tank 39 can be operated as layered storage tank in a very efficient way. A stable long-term operation of the heat pump at high COP can also be provided in this way.

For determination of the actual heating demands in the pasteurizing lines 2, 3, temperature sensors (not shown) can be arranged at suitable positions in the pasteurizing lines 2, 3.

Based on cooling demand for the first and second pasteurizing lines 2, 3, cooled cooling liquid from the cooling means 22 of the heat pump 20 may be fed into a lower region of a cooling liquid buffer tank 45, and cooling liquid may be fed back into the cooling means 22 of the heat pump 20 from an upper region of the cooling liquid buffer tank 45, thus circulating the cooling liquid between the cooling means 22 and the cooling liquid buffer tank 45. Such procedure is convenient in case of low cooling demand in the pasteurizing lines 2, 3, as the cooling capacity of the heat pump can nevertheless be used to lower the overall temperature level of the cooling liquid in the cooling liquid buffer tank 45 in this way.

Based on cooling demand for the first and second pasteurizing lines 2, 3, cooling liquid may then be fed into the first cooling heat exchanger 32 and/or the second cooling heat exchanger 33 from the lower region of the cooling liquid buffer tank 45 in order to cool the process liquid with a low temperature level of the first pasteurizing line 2 and/or the second pasteurizing line 3, and cooling liquid from the first cooling heat exchanger 32 and/or from the second cooling heat exchanger 33 may be fed back into the upper region of the cooling liquid buffer tank 45. Such procedure is of particular advantage, when a high cooling demand exists in the first and/or second pasteurizing lines 2, 3.

As is depicted in Fig. 2, the cooled cooling liquid from the cooling means 22 may be fed into the cooling liquid buffer tank 45 via the hollow profile body 49 arranged within the lower region of the cooling liquid buffer tank 45. cooling liquid may be fed back from the cooling liquid buffer tank 45 into the cooling means 22 via the further hollow profile body 50 arranged within the upper region of the cooling liquid buffer tank 45.

Based on cooling demand for the first and second pasteurizing lines 2, 3, the cooling liquid from the lower region of the cooling liquid buffer tank 45 may then be fed into the first cooling heat exchanger 32 and/or the second cooling heat exchanger 33 via the hollow profile body 49 in the lower region of the cooling liquid buffer tank 45, and cooling liquid from the first and/or second cooling heat exchanger 32, 33 may be fed back into the upper region of the cooling liquid buffer tank 45 via the further hollow profile body 50. By using the hollow profile bodies 49, 50 both for loading and unloading, the cooling liquid buffer tank 45 can be operated as layered storage tank in a very efficient way. A stable long-term operation of the heat pump at high COP can also be provided in this way.

For determination of the actual cooling demands of the pasteurizing lines 2, 3, temperature sensors can be arranged at suitable positions in the pasteurizing lines 2, 3.

Another embodiment of the pasteurizing plant 1 is shown in Fig. 1. Dependent on operating conditions, particular high cooling demands may arise in the pasteurizing lines 2, 3. To cover such cooling demand peaks, the pasteurizing plant 1 may comprise at least one additional cooling device 54 for further cooling the process liquid(s) with a low temperature level of the first and/or the second pasteurizing lines 2, 3. Within the embodiment depicted in Fig. 1, both the first pasteurizing line 2 and the second pasteurizing line 3 comprise an additional cooling device 54 for cooling the respective process liquid. In the embodiment depicted in Fig. 1, in each of the pasteurizing lines 2, 3, the additional cooling device 54 is an air-cooled or water-cooled cooling tower with a heat exchanger 55 for conveying through the respective process liquid(s). The heat exchangers may for example be in operative flow connection with the respective cold collection tanks 18 of the pasteurizing lines 2, 3.

During operation of the pasteurizing plant 1, the process liquid(s) with a low temperature level of the first and/or the second pasteurizing lines 2, 3 may be cooled further by means of the at least one additional cooling device 54, by conveying the process liquid(s) through a heat exchanger 55 of the at least one air-cooled or water-cooled cooling tower. By means of the heat exchangers 55 of the cooling devices 54 depicted in Fig. 1, a contamination of the process liquid(s) during cooling, as for example potentially caused by direct contact with cooling air, can be prevented.

For further heating up the temperature of process liquid, in particular for the process liquid flows to be fed into the respective pasteurizing zones 9, 10 of the pasteurizing lines 2, 3, additional heating devices 56 may also be provided in the pasteurizing lines 2, 3. As shown in Fig. 1, such additional heating devices 56 may for example be arranged in the output lines 29 for the process liquids, upstream of the heating heat exchangers 23, 26. The additional heating devices 56 may for example be heat exchangers chargeable with hot water vapor.

For simplicity and clarity reasons, the exemplary embodiments shown in Fig. 1 and Fig. 2 comprise just two pasteurizing lines 2, 3, and the invention has been described by reference of such a pasteurizing plant 1. A person skilled in the art will appreciate, that the same principle can of course also be applied for pasteurizing plants comprising more than two pasteurizing lines, for example by adding a third and a fourth pasteurizing line, and so on. Such third and fourth pasteurizing lines could be assigned third and fourth heating heat exchangers operatively connectable with the heating means of the heat pump, and could be assigned third and fourth cooling heat exchangers operatively connectable with the cooling means of the heat pump. The meaning of the terms "operatively connected" and "operative flow connection" throughout this specification is, that a respective liquid may be circulated between "operatively connected" elements or elements in "operative flow connection".

For the sake of good order, finally, it should be pointed out that, in order to provide a clearer understanding of the structure, elements are illustrated to a certain extent out of scale and/or on an enlarged scale and/or on a reduced scale.

**List of reference numbers**

| | | | |
|---|---|---|---|
| | | 36 | Output line |
| 1 | Pasteurizing plant | 37 | Input line |
| 2 | Pasteurizing line | 38 | Output line |
| 3 | Pasteurizing line | 39 | Heating liquid buffer tank |
| 4 | Container | 40 | Output |
| 5 | Transporting means | | |
| | | | |
| 6 | Transorting direction | 41 | Input |
| 7 | Heating zone | 42 | Conveying means |
| 8 | Heating zone | 43 | Hollow profile body |
| 9 | Heating zone | 44 | Hollow profile body |
| 10 | Heating zone | 45 | Cooling liquid buffer tank |
| | | | |
| 11 | Cooling zone | 46 | Output |
| 12 | Cooling zone | 47 | Input |
| 13 | Irrigation means | 48 | Conveying means |
| 14 | Liquid conveying device | 49 | Hollow profile body |
| 15 | Bottom area | 50 | Hollow profile body |
| | | | |
| 16 | Recuperation line | 51 | Heating circuit |
| 17 | Hot collection tank | 52 | Cooling circuit |
| 18 | Cold collection tank | 53 | Temperature sensor |
| 19 | Metering device | 54 | Cooling device |
| 20 | Heat pump | 55 | Heat exchanger |
| | | | |
| 21 | Heating means | 56 | Heating device |
| 22 | Cooling means | | |
| 23 | Heating heat exchanger | | |
| 24 | Liquid transport line | | |
| 25 | Shut-off means | | |
| | | | |
| 26 | Heating heat exchanger | | |
| 27 | Conveying means | | |
| 28 | Input line | | |
| 29 | Output line | | |
| 30 | Input line | | |
| | | | |
| 31 | Output line | | |
| 32 | Cooling heat exchanger | | |
| 33 | Cooling heat exchanger | | |
| 34 | Conveying means | | |
| 35 | Input line | | |

## Claims

1. A pasteurizing plant (1) comprising a first pasteurizing line (2) and at least a second pasteurizing line (3),
wherein each of the first and the second pasteurizing lines (2, 3) comprise at least one heating zone (7, 8, 9, 10) and at least one cooling zone (11, 12), the heating zones (7, 8, 9, 10) and the cooling zones (11, 12) each comprising irrigation means (13) configured for dispensing a temperature controlled process liquid into the respective zones (7, 8, 9, 10, 11, 12),
and wherein each of the first and the second pasteurizing lines (2, 3) comprise a transporting means (5) configured for transporting sealed containers (4) filled with foodstuff through the at least one respective heating zone (7, 8, 9, 10) and subsequently through the at least one respective cooling zone (11, 12),
and wherein the pasteurizing plant (1) comprises a heat pump (20) with a heating means (21) for heating a heating liquid and a cooling means (22) for cooling a cooling liquid,
**characterized in that**,
the heating means (21) of the heat pump (20) at least is operatively connected with a primary side of a first heating heat exchanger (23) via liquid transport lines (24) and at least one shut-off means (25) arranged between solely the heating means (21) and the first heating heat exchanger (23), and the heating means (21) is additionally operatively connected with a primary side of a second heating heat exchanger (26) via liquid transport lines (24) and at least one shut-off means (25) arranged between solely the heating means (21) and the second heating heat exchanger (26),
wherein at least one heating liquid conveying means (27) is arranged for circulating the heating liquid through the heating means (21), and through the primary side of the first heating heat exchanger (23) and/or through the primary side of the second heating heat exchanger (26),
and wherein a secondary side of the first heating heat exchanger (23) is connected with an input line (28) and an output line (29) for process liquid of the first pasteurizing line (2), and a secondary side of the second heating heat exchanger (26) is connected with an input line (30) and an output line (31) for process liquid of the second pasteurizing line (3),
and that the cooling means (22) of the heat pump (20) at least is operatively connected with a primary side of a first cooling heat exchanger (32) via liquid transport lines (24) and at least one shut-off means (25) arranged between solely the cooling means (22) and the first cooling heat exchanger (32), and the cooling means (22) is additionally operatively connected with a primary side of a second cooling heat exchanger (33) via liquid transport lines (24) and at least one shut-off means (25) arranged between solely the cooling means (22) and the second cooling heat exchanger (33),
wherein at least one cooling liquid conveying means (34) is arranged for circulating the cooling liquid through the cooling means (22), and through the primary side of the first cooling heat exchanger (32) and/or through the primary side of the second cooling heat exchanger (33),
and wherein a secondary side of the first cooling heat exchanger (32) is connected with an input line (35) and an output line (36) for process liquid of the first pasteurizing line (2), and a secondary side of the second cooling heat exchanger (33) is connected with an input line (37) and an output line (38) for process liquid of the second pasteurizing line (3).

2. The pasteurizing plant according to claim 1, **characterized in that** an output (40) of the heating means (21) is connected with an upper region of a heating liquid buffer (39) tank via liquid transport lines (24) and at least one shut-off means (25) arranged between solely the output (40) of the heating means (21) and the upper region of the heating liquid buffer (39), and an input (41) of the heating means (21) is connected with a lower region of the heating liquid buffer tank (39) via liquid transport lines (24) and at least one shut-off means (25) arranged between solely the input (41) of the heating means (21) and the lower region of the heating liquid buffer tank (39), and that separately at other positions of the heating liquid buffer tank (39), an upper region and a lower region of the heating liquid buffer tank (39) are operatively connected with the primary side of the first heating heat exchanger (23) via liquid transport lines (24) and at least one further shut-off means (25) arranged between solely the heating liquid buffer tank (39) and the first heating heat exchanger (23), and the upper region and a lower region of the heating liquid buffer tank (39) are also operatively connected with the primary side of the second heating heat exchanger (26) via liquid transport lines (24) and at least one further shut-off means (25) arranged between solely the heating liquid buffer tank (39) and the second heating heat exchanger (26), wherein at least one further heating liquid conveying means (42) is arranged for conveying the heating liquid from the upper region of the heating liquid buffer tank (39) through the primary side of the first heating heat exchanger (23) and/or through the primary side of the second heating heat exchanger (26), and back into the lower region of the heating liquid buffer tank (39) from the first heating heat exchanger (23) and/or the from the second heating heat exchanger (26).

3. The pasteurizing plant according to claim 2, **characterized in that** the liquid transport lines (24) leading from the output (40) of the heating means (21) to the upper region of the heating liquid buffer tank (39) are connected to a hollow profile body (43) with openings within a section of its circumferential surface, which hollow profile body (43) is arranged within the upper region of the heating liquid buffer tank (39) such that all openings face towards an upper end of the heating liquid buffer tank (39), and that the liquid transport lines (24) leading from the lower region of the heating liquid buffer tank (39) to the input (41) of the heating means (21) are connected to a further hollow profile body (44) with openings within a section of its circumferential surface, which further hollow profile body (44) is arranged within the lower region of the heating liquid buffer tank (39) such that all openings face towards a lower end of the heating liquid buffer tank (39).

4. The pasteurizing plant according to claim 3,
**characterized in that** the liquid transport lines (24) leading from the upper region of the heating liquid buffer tank (39) to the first heating heat exchanger (23) and the liquid transport lines (24) leading from the upper region of the heating liquid buffer tank (39) to the second heating heat exchanger (26) are connected to the hollow profile body (43) arranged within the upper region of the heating liquid buffer tank (39), and that the liquid transport lines (24) leading from the first heating heat exchanger (23) and the liquid transport lines (24) leading from the second heating heat exchanger (26) to the lower region of the heating liquid buffer tank (39) are connected to the hollow profile body (44) arranged within the lower region of the heating liquid buffer tank (39).

5. The pasteurizing plant according to one of claims 1 to 4, **characterized in that**, an output (46) of the cooling means (22) is connected with a lower region of a cooling liquid buffer tank (45) via liquid transport lines (24) and at least one shut-off means (25) arranged between solely the output (46) of the cooling means (22) and the lower region of the cooling liquid buffer tank (45), and an input (47) of the cooling means (22) is connected with an upper region of the cooling liquid buffer tank (45) via liquid transport lines (24) and at least one shut-off means (25) arranged between solely the input (47) of the cooling means (22) and the upper region of the cooling liquid buffer tank (45), and that separately at other positions of the cooling liquid buffer tank (45), a lower region and an upper region of the cooling buffer tank (45) are operatively connected with the primary side of the first cooling heat exchanger (32) via liquid transport lines (24) and at least one further shut-off means (25) arranged between solely the cooling liquid buffer tank (45) and the first cooling heat exchanger (32), and the lower region and the upper region of the cooling buffer tank (45) are also operatively connected with the primary side of the second cooling heat exchanger (33) via liquid transport lines (24) and at least one further shut-off means (25) arranged between solely the cooling liquid buffer tank (45) and the second cooling heat exchanger (33), wherein at least one further cooling liquid conveying means (48) is arranged for conveying the cooling liquid from the lower region of the cooling liquid buffer tank (45) through the primary side of the first cooling heat exchanger (32) and/or through the primary side of the second cooling heat exchanger (33), and back into the upper region of the cooling liquid buffer tank (45).

6. The pasteurizing plant according to claim 5, **characterized in that** the liquid transport lines (24) leading from the output (46) of the cooling means (22) to the lower region of the cooling liquid buffer tank (45) are connected to a hollow profile body (49) with openings within a section of its circumferential surface, which hollow profile body (49) is arranged within the lower region of the cooling liquid buffer tank (45) such that all openings face towards a lower end of the cooling liquid buffer tank (45), and that the liquid transport lines (24) leading from the upper region of the cooling liquid buffer tank (45) to the input (47) of the cooling means (22) are connected to a further hollow profile body (50) with openings within a section of its circumferential surface, which further hollow profile body (50) is arranged within the upper region of the cooling liquid buffer tank (45) such that all openings face towards an upper end of the cooling liquid buffer tank (45).

7. The pasteurizing plant according to claim 6, **characterized in that** the liquid transport lines (24) leading from the lower region of the cooling liquid buffer tank (45) to the first cooling heat exchanger (32) and the liquid transport lines (24) leading from the lower region of the cooling liquid buffer tank (45) to the second cooling heat exchanger (33) are connected to the hollow profile body (49) arranged within the lower region of the cooling liquid buffer tank (45), and that the liquid transport lines (24) leading from the first cooling heat exchanger (32) and the liquid transport lines (24) leading from the second cooling heat exchanger (33) to the upper region of the cooling liquid buffer tank (45) are connected to the hollow profile body (50) arranged within the upper region of the cooling liquid buffer tank (45).

8. The pasteurizing plant according to one of claims 1 to 7, **characterized in that** it comprises at least one additional cooling device (54) for further cooling the process liquid(s) with a low temperature level of the first and/or the second pasteurizing lines (2, 3).

9. The pasteurizing plant according to claim 8, **characterized in that** the at least one additional cooling device (54) is an air-cooled or water-cooled cooling tower with a heat exchanger (55) for conveying through the process liquid(s).

10. A method for operating a pasteurizing plant (1) according to one of claims 1 to 9 comprising a first pasteurizing line (2) and at least a second pasteurizing line (3),
wherein in each of the first and second pasteurization lines (2, 3) sealed containers (4) filled with foodstuff are conveyed through at least one heating zone (7, 8, 9, 10) and subsequently through at least one cooling zone (11, 12),
and wherein in each of the first and second pasteurization lines (2, 3) the foodstuff is heated in the at least one respective heating zone (7, 8, 9, 10) by dispensing a temperature-controlled process liquid onto the containers (4), and the foodstuff subsequently is cooled in the at least one respective cooling zone (11, 12) by dispensing a temperature-controlled process liquid onto the containers (4),
and wherein a heating liquid is heated by means of a heating means (21) of the heat pump (20) and a cooling liquid is cooled by means of the cooling means (22) of the heat pump (20),
**characterized in that**
based on heating demand for the first and second pasteurizing lines (2, 3), the heated heating liquid from the heating means (21) of the heat pump (20) is used to heat process liquid with a high temperature level of the first pasteurizing line (2) by means of the first heating heat exchanger (23), and/or the heated heating liquid from the heating means (21) of the heat pump (20) is used to heat process liquid with a high temperature level of the second pasteurizing line (3) by means of the second heating heat exchanger (26), and that based on cooling demand for the first and second pasteurizing lines (2, 3), the cooled cooling liquid from the cooling means (22) of the heat pump (20) is used to cool process liquid with a low temperature level of the first pasteurizing line (2) by means of the first cooling heat exchanger (32), and/or the cooled cooling liquid from the cooling means (22) of the heat pump (20) is used to cool process liquid with a low temperature level of the second pasteurizing line (3) by means of the second cooling heat exchanger (33).

11. The method according to claim 10, **characterized in that** based on heating demand for the first and second pasteurizing lines (2, 3), the heated heating liquid from the heating means (21) of the heat pump (20) is fed into an upper region of a heating liquid buffer tank (39), and heating liquid is fed back into the heating means (21) of the heat pump (20) from a lower region of the heating liquid buffer tank (39).

12. The method according to claim 11, **characterized in that** based on heating demand for the first and second pasteurizing lines (2, 3), heating liquid is fed into the first heating heat exchanger (23) and/or the second heat exchanger (26) from the upper region of the heating liquid buffer tank (39) in order to heat the process liquid with a high temperature level of the first pasteurizing line (2) and/or the second pasteurizing line (3), and heating liquid from the first heat exchanger (23) and/or from the second heat exchanger (26) is fed back into the lower region of the heating liquid buffer tank (39).

13. The method according to claim 11, **characterized in that** the heated heating liquid from the heating means (21) is fed into the heating liquid buffer tank (39) via a hollow profile body (43) with openings within a section of its circumferential surface, the hollow profile body (43) being arranged within the upper region of the heating liquid buffer tank (39) such that all openings face towards an upper end of the heating liquid buffer tank (39), and that heating liquid is fed back from the heating liquid buffer tank (39) into the heating means (21) via a further hollow profile body (44) with openings within a section of its circumferential surface, the further hollow profile body (44) being arranged within the lower region of the heating liquid buffer tank (39) such that all openings face towards a lower end of the heating liquid buffer tank (39).

14. The method according to claims 12 and 13 **characterized in that** based on heating demand for the first and second pasteurizing lines (2, 3), the heating liquid from the upper region of the heating liquid buffer tank (39) is fed into the first heating heat exchanger (23) and/or the second heating heat exchanger (26) via the hollow profile body (43), and heating liquid from the first and/or second heating heat exchanger (23, 26) is fed back into the lower region of the heating liquid buffer tank (39) via the further hollow profile body (44).

15. The method according to one of claims 10 to 14, **characterized in that** based on cooling demand for the first and second pasteurizing lines (2, 3), cooled cooling liquid from the cooling means (22) of the heat pump (20) is fed into a lower region of a cooling liquid buffer tank (45), and cooling liquid is fed back into the cooling means (22) of the heat pump (20) from an upper region of the cooling liquid buffer tank (45).

16. The method according to claim 15, **characterized in that** based on cooling demand for the first and second pasteurizing lines (2, 3), cooling liquid is fed into the first cooling heat exchanger (32) and/or the second cooling heat exchanger (33) from the lower region of the cooling liquid buffer tank (45) in order to cool the process liquid with a low temperature level of the first pasteurizing line (2) and/or the second pasteurizing line (3), and cooling liquid from the first cooling heat exchanger (32) and/or from the second cooling heat exchanger (33) is fed back into the upper region of the cooling liquid buffer tank (45).

17. The method according to claim 15, **characterized in that** the cooled cooling liquid from the cooling means (22) of the heat pump (20) is fed into the cooling liquid buffer tank (45) via a hollow profile body (49) with openings within a section of its circumferential surface, the hollow profile body (49) being arranged within the lower region of the cooling liquid buffer tank (45) such that all openings face towards a lower end of the cooling liquid buffer tank (45), and that cooling liquid from the cooling liquid buffer tank (45) is fed back into the cooling means (22) via a further hollow profile body (50) with openings within a section of its circumferential surface, the further hollow profile body (50) being arranged within the upper region of the cooling liquid buffer tank (45) such that all openings face towards an upper end of the cooling liquid buffer tank (45).

18. The method according to claims 16 and 17, **characterized in that** based on cooling demand for the first and second pasteurizing lines (2, 3), the cooling liquid from the lower region of the cooling liquid buffer tank (45) is fed into the first cooling heat exchanger (32) and/or the second cooling heat exchanger (33) via the hollow profile body (49), and cooling liquid from the first and/or second cooling heat exchanger (32, 33) is fed back into the upper region of the cooling liquid buffer tank (45) via the further hollow profile body (50).

19. The method according to one of claims 10 to 18, **characterized in that** based on cooling demand for the first and second pasteurizing lines (2, 3), the process liquid(s) with a low temperature level of the first and/or the second pasteurizing lines (2, 3) are cooled further by means of at least one additional cooling device (54).

20. The method according to claim 18, **characterized in that** the process liquid(s) with a low temperature level are cooled further by conveying them through a heat exchanger (55) of at least one air-cooled or water-cooled cooling tower.

## Patentansprüche

1. Pasteurisierungsanlage (1) umfassend eine erste Pasteurisierungslinie (2) und zumindest eine zweite Pasteurisierungslinie (3),
wobei die erste und die zweite Pasteurisierungslinie (2, 3) jeweils zumindest eine Aufheizzone (7, 8, 9, 10) und zumindest eine Abkühlzone (11, 12) ausweisen, und die Aufheizzonen (7, 8, 9, 10) und die Abkühlzonen (11, 12) jeweils Berieselungsmittel (13) aufweisen, die dazu ausgebildet sind, eine temperaturgeregelte Prozessflüssigkeit in die jeweiligen Zonen (7, 8, 9, 10, 11, 12) abzugeben,
und wobei die erste und zweite Pasteurisierungslinie (2, 3) jeweils ein Transportmittel (5) aufweisen, das zum Transport verschlossener Behältnisse (4), die mit einem Nahrungsmittel gefüllt sind, durch die zumindest eine Aufheizzone (7, 8, 9, 10) und nachfolgend durch die zumindest eine Abkühlzone (11, 12) ausgebildet ist,
und wobei die Pasteurisierungsanlage (1) eine Wärmepumpe (20) mit einer Heizeinrichtung (21) zur Erhitzung einer Heizflüssigkeit und eine Kühleinrichtung (22) zum Abkühlen einer Kühlflüssigkeit aufweist,
**dadurch gekennzeichnet, dass**
die Heizeinrichtung (21) der Wärmepumpe (20) über Flüssigkeitstransportleitungen (24) und zumindest ein Absperrmittel (25) mit einer Primärseite eines ersten Heizungs-Wärmetauschers (23) zumindest wirkverbunden ist, welches Absperrmittel (25) ausschließlich zwischen der Heizeinrichtung (21) und dem ersten Heizungs-Wärmetauscher (23) angeordnet ist, und die Heizeinrichtung (21) zusätzlich über Flüssigkeitstransportleitungen (24) und zumindest ein Absperrmittel (25) mit einer Primärseite eines zweiten Heizungs-Wärmetauschers (26) wirkverbunden ist, welches Absperrmittel (25) ausschließlich zwischen der Heizeinrichtung (21) und dem zweiten Heizungs-Wärmetauscher (26) angeordnet ist,
wobei zumindest ein Heizflüssigkeits-Fördermittel (27) zum Zirkulieren der Heizflüssigkeit durch die Heizeinrichtung (21), und durch die Primärseite des ersten Heizungs-Wärmetauschers (23) und/oder durch die Primärseite des zweiten Heizungs-Wärmetauschers (26) angeordnet ist,
und wobei eine Sekundärseite des ersten Heizungs-Wärmetauschers (23) mit einer Eingangsleitung (28) und einer Ausgangsleitung (29) für Prozessflüssigkeit der ersten Pasteurisierungslinie (2) verbunden ist, und eine Sekundärseite des zweiten Heizungs-Wärmetauschers (26) mit einer Eingangsleitung (30) und einer Ausgangsleitung (31) für Prozessflüssigkeit der zweiten Pasteurisierungslinie (3) verbunden ist,
und dass die Kühleinrichtung (22) der Wärmepumpe (20) über Flüssigkeitstransportleitungen (24) und zumindest ein Absperrmittel (25) mit einer Primärseite eines ersten Kühl-Wärmetauschers (32) zumindest wirkverbunden ist, welches Absperrmittel (25) ausschließlich zwischen der Kühleinrichtung (22) und dem ersten Kühl-Wärmetauscher (32) angeordnet ist, und die Kühleinrichtung (22) zusätzlich über Flüssigkeitstransportleitungen (24) und zumindest ein Absperrmittel (25) mit einer Primärseite eines zweiten Kühl-Wärmetauschers (33) wirkverbunden ist, welches Absperrmittel (25) ausschließlich zwischen der Kühleinrichtung (22) und dem zweiten Kühl-Wärmetauscher (33) angeordnet ist, wobei zumindest ein Kühlflüssigkeits-Fördermittel (34) zum Zirkulieren der Kühlflüssigkeit durch die Kühleinrichtung (22), und durch die Primärseite des ersten Kühl-Wärmetauschers (32) und/oder durch die Primärseite des zweiten Kühl-Wärmetauschers (33), angeordnet ist,
und wobei eine Sekundärseite des ersten Kühl-Wärmetauschers (32) mit einer Eingangsleitung (35) und einer Ausgangsleitung (36) für Prozessflüssigkeit der ersten Pasteurisierungslinie (2) verbunden ist, und eine Sekundärseite des zweiten Kühl-Wärmetauschers (33) mit einer Eingangsleitung (37) und einer Ausgangsleitung (38) für Prozessflüssigkeit der zweiten Pasteurisierungslinie (3) verbunden ist.

2. Pasteurisierungsanlage nach Anspruch 1, **dadurch gekennzeichnet, dass** ein Auslass (40) der Heizeinrichtung (21) über Flüssigkeitstransportleitungen (24) und zumindest ein Absperrmittel (25) mit einem oberen Bereich eines Heizflüssigkeits-Puffertanks (39), welches Absperrmittel (25) ausschließlich zwischen dem Auslass (40) der Heizeinrichtung (21) und dem oberen Bereich des Heizflüssigkeits-Puffers (39) angeordnet ist, verbunden ist, und ein Einlass (41) der Heizeinrichtung (21) über Flüssigkeitstransportleitungen (24) und zumindest ein Absperrmittel (25) mit einem unteren Bereich des Heizflüssigkeits-Puffertanks (39) verbunden ist, welches Absperrmittel (25) ausschließlich zwischen dem Einlass (41) der Heizeinrichtung (21) und dem unteren Bereich des Heizflüssigkeits-Puffertanks (39) angeordnet ist, und dass separat an anderen Stellen des Heizflüssigkeits-Puffertanks (39) ein oberer Bereich und ein unterer Bereich des Heizflüssigkeits-Puffertanks (39) über Flüssigkeitstransportleitungen (24) und zumindest ein weiteres Absperrmittel (25) mit der Primärseite des ersten Heizungs-Wärmetauschers (23) wirkverbunden sind, welches weitere Absperrmittel (25) ausschließlich zwischen dem Heizflüssigkeits-Puffertank (39) und dem ersten Heizungs-Wärmetauscher (23) angeordnet ist, und der obere Bereich und ein unterer Bereich des Heizflüssigkeits-Puffertanks (39) auch über Flüssigkeitstransportleitungen (24) und zumindest ein weiteres Absperrmittel (25) mit der Primärseite des zweiten Heizungs-Wärmetauschers (26) wirkverbunden sind, welches weitere Absperrmittel (25) ausschließlich zwischen dem Heizflüssigkeits-Puffertank (39) und dem zweiten Heizungs-Wärmetauscher (26) angeordnet ist, wobei zumindest ein weiteres Heizflüssigkeits-Fördermittel (42) zum Fördern der Heizflüssigkeit vom oberen Bereich des Heizflüssigkeits-Puffertanks (39) durch die Primärseite des ersten Heizungs-Wärmetauschers (23) und/oder durch die Primärseite des zweiten Heizungs-Wärmetauschers (26), und zurück in den unteren Bereich des Heizflüssigkeits-Puffertanks (39) vom ersten Heizungs-Wärmetauscher (23) und/oder vom zweiten Heizungs-Wärmetauscher (26) angeordnet ist.

3. Pasteurisierungsanlage nach Anspruch 2, **dadurch gekennzeichnet, dass** die Flüssigkeitstransportleitungen (24), die vom Auslass (40) der Heizeinrichtung (21) zum oberen Bereich des Heizflüssigkeits-Puffertanks (39) führen, mit einem Hohlprofilkörper (43) mit Öffnungen innerhalb eines Bereichs seiner Umfangsfläche verbunden sind, welcher Hohlprofilkörper (43) so innerhalb des oberen Bereichs des Heizflüssigkeits-Puffertanks (39) angeordnet ist, dass alle Öffnungen einem oberen Ende des Heizflüssigkeits-Puffertanks (39) zugewandt sind, und dass die Flüssigkeitstransportleitungen (24), die vom unteren Bereich des Heizflüssigkeits-Puffertanks (39) zum Einlass (41) der Heizeinrichtung (21) führen, mit einem weiteren Hohlprofilkörper (44) mit Öffnungen innerhalb eines Bereichs seiner Umfangsfläche verbunden sind, welcher weitere Hohlprofilkörper (44) so innerhalb des unteren Bereichs des Heizflüssigkeits-Puffertanks (39) angeordnet ist, dass alle Öffnungen einem unteren Ende des Heizflüssigkeits-Puffertanks (39) zugewandt sind.

4. Pasteurisierungsanlage nach Anspruch 3, **dadurch gekennzeichnet, dass** die Flüssigkeitstransportleitungen (24), die vom oberen Bereich des Heizflüssigkeits-Puffertanks (39) zum ersten Heizungs-Wärmetauscher (23) führen, und die Flüssigkeitstransportleitungen (24), die vom oberen Bereich des Heizflüssigkeits-Puffertanks (39) zum zweiten Heizungs-Wärmetauscher (26) führen, mit dem Hohlprofilkörper (43) verbunden sind, der innerhalb des oberen Bereichs des Heizflüssigkeits-Puffertanks (39) angeordnet ist, und dass die Flüssigkeitstransportleitungen (24), die vom ersten Heizungs-Wärmetauscher (23), und die Flüssigkeitstransportleitungen (24), die vom zweiten Heizungs-Wärmetauscher (26) in den unteren Bereich des Heizflüssigkeits-Puffertanks (39) führen, mit dem Hohlprofilkörper (44) verbunden sind, der innerhalb des unteren Bereichs des Heizflüssigkeits-Puffertanks (39) angeordnet ist.

5. Pasteurisierungsanlage nach einem der Ansprüche 1 bis 4, **dadurch gekennzeichnet, dass** ein Auslass (46) der Kühleinrichtung (22) über Flüssigkeitstransportleitungen (24) und zumindest ein Absperrmittel (25) mit einem unteren Bereich eines Kühlflüssigkeits-Puffertanks (45) verbunden ist, welches Absperrmittel (25) ausschließlich zwischen dem Auslass (46) der Kühleinrichtung (22) und dem unteren Bereich des Kühlflüssigkeits-Puffertanks (45) angeordnet ist, und ein Einlass (47) der Kühleinrichtung (22) über Flüssigkeitstransportleitungen (24) und zumindest ein Absperrmittel (25) mit einem oberen Bereich des Kühlflüssigkeits-Puffertanks (45) verbunden ist, welches Absperrmittel (25) ausschließlich zwischen dem Einlass (47) der Kühleinrichtung (22) und dem oberen Bereich des Kühlflüssigkeits-Puffertanks (45) angeordnet ist, und dass separat an anderen Stellen des Kühlflüssigkeits-Puffertanks (45) ein unterer Bereich und ein oberer Bereich des Kühlflüssigkeits-Puffertanks (45) über Flüssigkeitstransportleitungen (24) und zumindest ein weiteres Absperrmittel (25) mit der Primärseite des ersten Kühl-Wärmetauschers (32) wirkverbunden sind, welches Absperrmittel (25) ausschließlich zwischen dem Kühlflüssigkeits-Puffertank (45) und dem ersten Kühl-Wärmetauscher (32) angeordnet ist, und der untere Bereich und der obere Bereich des Kühlflüssigkeits-Puffertanks (45) auch über Flüssigkeitstransportleitungen (24) und zumindest ein weiteres Absperrmittel (25) mit der Primärseite des zweiten Kühl-Wärmetauschers (33) wirkverbunden sind, welches weitere Absperrmittel (25) ausschließlich zwischen dem Kühlflüssigkeits-Puffertank (45) und dem zweiten Kühl-Wärmetauscher (33) angeordnet ist, wobei zumindest ein weiteres Kühlflüssigkeits-Fördermittel (48) zum Fördern der Kühlflüssigkeit vom unteren Bereich des Kühlflüssigkeits-Puffertanks (45) durch die Primärseite des ersten Kühl-Wärmetauschers (32) und/oder durch die Primärseite des zweiten Kühl-Wärmetauschers (33), und zurück in den oberen Bereich des Kühlflüssigkeits-Puffertanks (45) angeordnet ist.

6. Pasteurisierungsanlage nach Anspruch 5, **dadurch gekennzeichnet, dass** die Flüssigkeitstransportleitungen (24), die vom Auslass (46) der Kühleinrichtung (22) zum unteren Bereich des Kühlflüssigkeits-Puffertanks (45) führen, mit einem Hohlprofilkörper (49) mit Öffnungen innerhalb eines Bereichs seiner Umfangsfläche verbunden sind, welcher Hohlprofilkörper (49) so innerhalb des unteren Bereichs des Kühlflüssigkeits-Puffertanks (45) angeordnet ist, dass alle Öffnungen einem unteren Ende des Kühlflüssigkeits-Puffertanks (45) zugewandt sind, und dass die Flüssigkeitstransportleitungen (24), die vom oberen Bereich des Kühlflüssigkeits-Puffertanks (45) zum Einlass (47) der Kühleinrichtung (22) führen, mit einem weiteren Hohlprofilkörper (50) mit Öffnungen innerhalb eines Bereichs seiner Umfangsfläche verbunden sind, welcher weitere Hohlprofilkörper (50) so innerhalb des oberen Bereichs des Kühlflüssigkeits-Puffertanks (45) angeordnet ist, dass alle Öffnungen einem oberen Ende des Kühlflüssigkeits-Puffertanks (45) zugewandt sind.

7. Pasteurisierungsanlage nach Anspruch 6, **dadurch gekennzeichnet, dass** die Flüssigkeitstransportleitungen (24), die vom unteren Bereich des Kühlflüssigkeits-Puffertanks (45) zum ersten Kühl-Wärmetauscher (32) führen, und die Flüssigkeitstransportleitungen (24), die vom unteren Bereich des Kühlflüssigkeits-Puffertanks (45) zum zweiten Kühl-Wärmetauscher (33) führen, mit dem Hohlprofilkörper (49) verbunden sind, der innerhalb des unteren Bereichs des Kühlflüssigkeits-Puffertanks (45) angeordnet ist, und dass die Flüssigkeitstransportleitungen (24), die vom ersten Kühl-Wärmetauscher (32), und die Flüssigkeitstransportleitungen (24), die vom zweiten Kühl-Wärmetauscher (33) in den oberen Bereich des Kühlflüssigkeits-Puffertanks (45) führen, mit dem Hohlprofilkörper (50) verbunden sind, der innerhalb des oberen Bereichs des Kühlflüssigkeits-Puffertanks (45) angeordnet ist.

8. Pasteurisierungsanlage nach einem der Ansprüche 1 bis 7, **dadurch gekennzeichnet, dass** sie zumindest eine weitere Kühlvorrichtung (54) zur weiteren Kühlung der Prozessflüssigkeit(en) bei einem niedrigen Temperaturniveau der ersten und/oder der zweiten Pasteurisierungslinie (2, 3) aufweist.

9. Pasteurisierungsanlage nach Anspruch 8, **dadurch gekennzeichnet, dass** die zumindest eine Kühlvorrichtung (54) ein luftgekühlter oder wassergekühlter Kühlturm mit einem Wärmetauscher (55) zum Durchleiten der Prozessflüssigkeit(en) ist.

10. Verfahren zum Betrieb einer Pasteurisierungsanlage (1) nach einem der Ansprüche 1 bis 9, umfassend eine erste Pasteurisierungslinie (2) und zumindest eine zweite Pasteurisierungslinie (3),
wobei in jeder der ersten und zweiten Pasteurisierungslinien (2, 3) verschlossene Behältnisse (4), die mit Nahrungsmitteln gefüllt sind, durch zumindest eine Aufheizzone (7, 8, 9, 10) und anschließend durch zumindest eine Abkühlzone (11, 12) gefördert werden,
und wobei in jeder der ersten und zweiten Pasteurisierungslinien (2, 3) das Nahrungsmittel in der zumindest einen jeweiligen Aufheizzone (7, 8, 9, 10) durch Abgabe einer temperaturgeregelten Prozessflüssigkeit auf die Behältnisse (4) erhitzt wird, und anschließend das Nahrungsmittel in der zumindest einen jeweiligen Abkühlzone (11, 12) durch Abgabe einer temperaturgeregelten Prozessflüssigkeit auf die Behältnisse (4) gekühlt wird,
und wobei eine Heizflüssigkeit mittels einer Heizeinrichtung (21) der Wärmepumpe (20) erhitzt wird und eine Kühlflüssigkeit mittels der Kühleinrichtung (22) der Wärmepumpe (20) gekühlt wird,
**dadurch gekennzeichnet, dass**
basierend auf dem Heizbedarf für die erste und zweite Pasteurisierungslinie (2, 3), die von der Heizeinrichtung (21) der Wärmepumpe (20) erhitzte Heizflüssigkeit verwendet wird, um Prozessflüssigkeit mit einem hohen Temperaturniveau der ersten Pasteurisierungslinie (2) mittels des ersten Heizungs-Wärmetauschers (23) zu erhitzen, und/oder die von der Heizeinrichtung (21) der Wärmepumpe (20) erhitzte Heizflüssigkeit verwendet wird, um Prozessflüssigkeit mit einem hohen Temperaturniveau der zweiten Pasteurisierungslinie (3) mittels des zweiten Heizungs-Wärmetauschers (26) zu erhitzen,
und dass basierend auf dem Kühlbedarf für die erste und zweite Pasteurisierungslinie (2, 3), die von der Kühleinrichtung (22) der Wärmepumpe (20) gekühlte Kühlflüssigkeit verwendet wird, um Prozessflüssigkeit mit einem niedrigen Temperaturniveau der ersten Pasteurisierungslinie (2) mittels des ersten Kühl-Wärmetauschers (32) zu kühlen, und/oder die von der Kühleinrichtung (22) der Wärmepumpe (20) gekühlte Kühlflüssigkeit verwendet wird, um Prozessflüssigkeit mit einem niedrigen Temperaturniveau der zweiten Pasteurisierungslinie (3) mittels des zweiten Kühl-Wärmetauschers (33) zu kühlen.

11. Verfahren nach Anspruch 10, **dadurch gekennzeichnet, dass** basierend auf dem Heizbedarf für die erste und zweite Pasteurisierungslinie (2, 3), die von der Heizeinrichtung (21) der Wärmepumpe (20) erhitzte Heizflüssigkeit in einen oberen Bereich eines Heizflüssigkeits-Puffertanks (39) geleitet wird, und die Heizflüssigkeit von einem unteren Bereich des Heizflüssigkeits-Puffertanks (39) aus zurück in die Heizeinrichtung (21) der Wärmepumpe (20) geleitet wird.

12. Verfahren nach Anspruch 11, **dadurch gekennzeichnet, dass** basierend auf dem Heizbedarf für die erste und zweite Pasteurisierungslinie (2, 3), vom oberen Bereich des Heizflüssigkeits-Puffertanks (39) aus Heizflüssigkeit in den ersten Heizungs-Wärmetauscher (23) und/oder in den zweiten Wärmetauscher (26) geleitet wird, um die Prozessflüssigkeit mit einem hohen Temperaturniveau der ersten Pasteurisierungslinie (2) und/oder der zweiten Pasteurisierungslinie (3) zu erhitzen, und Heizflüssigkeit vom ersten Wärmetauscher (23) aus und/oder vom zweiten Wärmetauscher (26) aus zurück in den unteren Bereich des Heizflüssigkeits-Puffertanks (39) geleitet wird.

13. Verfahren nach Anspruch 11, **dadurch gekennzeichnet, dass** die erhitzte Heizflüssigkeit von der Heizeinrichtung (21) aus über einen Hohlprofilkörper (43), der Öffnungen innerhalb eines Bereichs seiner Umfangsfläche aufweist, zurück in den Heizflüssigkeits-Puffertank (39) geleitet wird, welcher Hohlprofilkörper (43) so innerhalb des oberen Bereichs des Heizflüssigkeits-Puffertanks (39) angeordnet ist, dass alle Öffnungen einem oberen Ende des Heizflüssigkeits-Puffertanks (39) zugewandt sind, und dass Heizflüssigkeit vom Heizflüssigkeits-Puffertank (39) aus über einen weiteren Hohlprofilkörper (44), der Öffnungen innerhalb eines Bereichs seiner Umfangsfläche aufweist, zurück in die Heizeinrichtung (21) geleitet wird, welcher weitere Hohlprofilkörper (44) so innerhalb des unteren Bereichs des Heizflüssigkeits-Puffertanks (39) angeordnet ist, dass alle Öffnungen einem unteren Ende des Heizflüssigkeits-Puffertanks (39) zugewandt sind.

14. Verfahren nach Ansprüchen 12 und 13, **dadurch gekennzeichnet, dass** basierend auf dem Heizbedarf für die erste und zweite Pasteurisierungslinie (2, 3), die Heizflüssigkeit vom oberen Bereich des Heizflüssigkeits-Puffertanks (39) aus über den Hohlprofilkörper (43) in den ersten Heizungs-Wärmetauscher (23) und/oder in den zweiten Heizungs-Wärmetauscher (26) geleitet wird, und Heizflüssigkeit vom ersten und/oder zweiten Wärmetauscher (23, 26) aus über den weiteren Hohlprofilkörper (44) zurück in den unteren Bereich des Heizflüssigkeits-Puffertanks (39) geleitet wird.

15. Verfahren nach einem der Ansprüche 10 bis 14, **dadurch gekennzeichnet, dass** basierend auf dem Kühlbedarf für die erste und zweite Pasteurisierungslinie (2, 3), die von der Kühleinrichtung (22) der Wärmepumpe (20) gekühlte Kühlflüssigkeit in einen unteren Bereich eines Kühlflüssigkeits-Puffertanks (45) geleitet wird, und die Kühlflüssigkeit von einem oberen Bereich des Kühlflüssigkeits-Puffertanks (45) aus zurück in die Kühleinrichtung (22) der Wärmepumpe (20) geleitet wird.

16. Verfahren nach Anspruch 15, **dadurch gekennzeichnet, dass** basierend auf dem Kühlbedarf für die erste und zweite Pasteurisierungslinie (2, 3), vom unteren Bereich des Kühlflüssigkeits-Puffertanks (45) aus Kühlflüssigkeit in den ersten Kühl-Wärmetauscher (32) und/oder in den zweiten Kühl-Wärmetauscher (33) geleitet wird, um die Prozessflüssigkeit mit einem niedrigen Temperaturniveau der ersten Pasteurisierungslinie (2) und/oder der zweiten Pasteurisierungslinie (3) zu kühlen, und Kühlflüssigkeit vom ersten Kühl-Wärmetauscher (32) aus und/oder vom zweiten Kühl-Wärmetauscher (33) aus zurück in den unteren Bereich des Kühlflüssigkeits-Puffertanks (45) geleitet wird.

17. Verfahren nach Anspruch 15, **dadurch gekennzeichnet, dass** die gekühlte Kühlflüssigkeit von der Kühleinrichtung (22) der Wärmepumpe (20) aus über einen Hohlprofilkörper (49), der Öffnungen innerhalb eines Bereichs seiner Umfangsfläche aufweist, zurück in den Kühlflüssigkeits-Puffertank (45) geleitet wird, welcher Hohlprofilkörper (49) so innerhalb des unteren Bereichs des Kühlflüssigkeits-Puffertanks (45) angeordnet ist, dass alle Öffnungen einem unteren Ende des Kühlflüssigkeits-Puffertanks (45) zugewandt sind, und dass Kühlflüssigkeit vom Kühlflüssigkeits-Puffertank (45) aus über einen weiteren Hohlprofilkörper (50), der Öffnungen innerhalb eines Bereichs seiner Umfangsfläche aufweist, zurück in die Kühleinrichtung (22) geleitet wird, welcher weitere Hohlprofilkörper (50) so innerhalb des oberen Bereichs des Kühlflüssigkeits-Puffertanks (45) angeordnet ist, dass alle Öffnungen einem unteren Ende des Kühlflüssigkeits-Puffertanks (45) zugewandt sind.

18. Verfahren nach Ansprüchen 16 und 17, **dadurch gekennzeichnet, dass** basierend auf dem Kühlbedarf für die erste und zweite Pasteurisierungslinie (2, 3), die Kühlflüssigkeit vom unteren Bereich des Kühlflüssigkeits-Puffertanks (45) aus über den Hohlprofilkörper (49) in den ersten Kühl-Wärmetauscher (32) und/oder in den zweiten Kühl-Wärmetauscher (33) geleitet wird, und Kühlflüssigkeit vom ersten und/oder zweiten Kühl-Wärmetauscher (32, 33) aus über den weiteren Hohlprofilkörper (50) zurück in den oberen Bereich des Kühlflüssigkeits-Puffertanks (45) geleitet wird.

19. Verfahren nach einem der Ansprüche 10 bis 18, **dadurch gekennzeichnet, dass** basierend auf dem Kühlbedarf für die erste und zweite Pasteurisierungslinie (2, 3), die Prozessflüssigkeit(en) bei einem niedrigen Temperaturniveau der ersten und/oder zweiten Pasteurisierungslinie (2, 3) mittels zumindest einer zusätzlichen Kühlvorrichtung (54) weiter gekühlt werden.

20. Verfahren nach Anspruch 18, **dadurch gekennzeichnet, dass** die Prozessflüssigkeit(en) mit einem niedrigen Temperaturniveau durch Leiten selbiger durch einen Wärmetauscher (55) zumindest eines luftgekühlten oder wassergekühlten Kühlturmes weiter gekühlt werden.

## Revendications

1. Installation de pasteurisation (1) comprenant une première chaîne de pasteurisation (2) et au moins une seconde chaîne de pasteurisation (3),
dans laquelle chacune de la première et de la seconde chaîne de pasteurisation (2, 3) comprend au moins une zone de chauffage (7, 8, 9, 10) et au moins une zone de refroidissement (11, 12), les zones de chauffage (7, 8, 9, 10) et les zones de refroidissement (11, 12) comprenant chacune un moyen d'irrigation (13) configuré pour distribuer un liquide de traitement à température régulée dans les zones (7, 8, 9, 10, 11, 12) respectives,
et dans laquelle chacune des première et seconde chaînes de pasteurisation (2, 3) comprend un moyen de transport (5) configuré pour transporter des conteneurs étanches (4) remplis de produit alimentaire à travers l'au moins une zone de chauffage (7, 8, 9, 10) respective et ensuite à travers l'au moins une zone de refroidissement (11, 12) respective,
et dans laquelle l'installation de pasteurisation (1) comprend une pompe à chaleur (20) avec un moyen de chauffage (21) pour chauffer un liquide de chauffage et un moyen de refroidissement (22) pour refroidir un liquide de refroidissement,
**caractérisée en ce que**
le moyen de chauffage (21) de la pompe à chaleur (20) est au moins relié opérationnellement à un côté primaire d'un premier échangeur thermique de chauffage (23) via des conduits de transport de liquide (24) et au moins un moyen de coupure (25) agencés uniquement entre le moyen de chauffage (21) et le premier échangeur thermique de chauffage (23), et le moyen de chauffage (21) est en outre relié opérationnellement à un côté primaire d'un second échangeur thermique de chauffage (26) via des conduits de transport de liquide (24) et au moins un moyen de coupure (25) agencés uniquement entre le moyen de chauffage (21) et le second échangeur thermique de chauffage (26),
dans laquelle au moins un moyen d'acheminement de liquide de chauffage (27) est agencé pour faire circuler le liquide de chauffage à travers le moyen de chauffage (21), et à travers le côté primaire du premier échangeur thermique de chauffage (23) et/ou à travers le côté primaire du second échangeur thermique de chauffage (26),
et dans laquelle un côté secondaire du premier échangeur thermique de chauffage (23) est relié à un conduit d'entrée (28) et un conduit de sortie (29) pour le liquide de traitement de la première chaîne de pasteurisation (2), et un côté secondaire du second échangeur thermique de chauffage (26) est relié à un conduit d'entrée (30) et un conduit de sortie (31) pour le liquide de traitement de la seconde chaîne de pasteurisation (3), et **en ce que** le moyen de refroidissement (22) de la pompe à chaleur (20) est au moins relié opérationnellement à un côté primaire d'un premier échangeur thermique de refroidissement (32) via des conduits de transport de liquide (24) et au moins un moyen de coupure (25) agencés uniquement entre le moyen de refroidissement (22) et le premier échangeur thermique de refroidissement (32), et le moyen de refroidissement (22) est en outre relié opérationnellement à un côté primaire d'un second échangeur thermique de refroidissement (33) via des conduits de transport de liquide (24) et au moins un moyen de coupure (25) agencés uniquement entre le moyen de refroidissement (22) et le second échangeur thermique de refroidissement (33),
dans laquelle au moins un moyen d'acheminement de liquide de refroidissement (34) est agencé pour faire circuler le liquide de refroidissement à travers le moyen de refroidissement (22), et à travers le côté primaire du premier échangeur thermique de refroidissement (32) et/ou à travers le côté primaire du second échangeur thermique de refroidissement (33),
et dans laquelle un côté secondaire du premier échangeur thermique de refroidissement (32) est relié à un conduit d'entrée (35) et un conduit de sortie (36) pour le liquide de traitement de la première chaîne de pasteurisation (2), et un côté secondaire du second échangeur thermique de refroidissement (33) est relié à un conduit d'entrée (37) et un conduit de sortie (38) pour le liquide de traitement de la seconde chaîne de pasteurisation (3).

2. Installation de pasteurisation selon la revendication 1, **caractérisée en ce qu'**une sortie (40) du moyen de chauffage (21) est reliée à une région supérieure d'un réservoir tampon de liquide de chauffage (39) via des conduits de transport de liquide (24) et au moins un moyen de coupure (25) agencés uniquement entre la sortie (40) du moyen de chauffage (21) et la région supérieure du réservoir tampon de liquide de refroidissement (39), et une entrée (41) du moyen de chauffage (21) est reliée à une région inférieure du réservoir tampon de liquide de chauffage (39) via des conduits de transport de liquide (24) et au moins un moyen de coupure (25) agencés uniquement entre l'entrée (41) du moyen de chauffage (21) et la région inférieure du réservoir tampon de liquide de chauffage (39), et **en ce que** séparément, à d'autres positions du réservoir tampon de liquide de chauffage (39), une région supérieure et une région inférieure du réservoir tampon de liquide de chauffage (39) sont reliées opérationnellement au côté primaire du premier échangeur thermique de chauffage (23) via des conduits de transport de liquide (24) et au moins un autre moyen de coupure (25) agencés uniquement entre le réservoir tampon de liquide de chauffage (39) et le premier échangeur thermique de chauffage (23), et la région supérieure et une région inférieure du réservoir tampon de liquide de chauffage (39) sont également reliées opérationnellement au côté primaire du second échangeur thermique de chauffage (26) via des conduits de transport de liquide (24) et au moins un autre moyen de coupure (25) agencés uniquement entre le réservoir tampon de liquide de chauffage (39) et le second échangeur thermique de chauffage (26), dans laquelle au moins un autre moyen d'acheminement de liquide de chauffage (42) est agencé pour acheminer le liquide de chauffage de la région supérieure du réservoir tampon de liquide de chauffage (39) à travers le côté primaire du premier échangeur thermique de chauffage (23) et/ou à travers le côté primaire du second échangeur thermique de chauffage (26), et de retour dans la région inférieure du réservoir tampon de liquide de chauffage (39) depuis le premier échangeur thermique de chauffage (23) et/ou depuis le second échangeur thermique de chauffage (26).

3. Installation de pasteurisation selon la revendication 2, **caractérisée en ce que** les conduits de transport de liquide (24) allant de la sortie (40) du moyen de chauffage (21) à la région supérieure du réservoir tampon de liquide de chauffage (39) sont reliés à un corps profilé creux (43) avec des ouvertures à l'intérieur d'une section de sa surface circonférentielle, lequel corps profilé creux (43) est agencé à l'intérieur de la région supérieure du réservoir tampon de liquide de chauffage (39) de telle sorte que toutes les ouvertures font face à une extrémité supérieure du réservoir tampon de liquide de chauffage (39), et **en ce que** les conduits de transport de liquide (24) allant de la région inférieure du réservoir tampon de liquide de chauffage (39) à l'entrée (41) du moyen de chauffage (21) sont reliés à un autre corps profilé creux (44) avec des ouvertures à l'intérieur d'une section de sa surface circonférentielle, lequel corps profilé creux (44) est agencé à l'intérieur de la région inférieure du réservoir tampon de liquide de chauffage (39) de telle sorte que toutes les ouvertures font face à une extrémité inférieure du réservoir tampon de liquide de chauffage (39).

4. Installation de pasteurisation selon la revendication 3, **caractérisée en ce que** les conduits de transport de liquide (24) allant de la région supérieure du réservoir tampon de liquide de chauffage (39) au premier échangeur thermique de chauffage (23) et les conduits de transport de liquide (24) allant de la région supérieure du réservoir tampon de liquide de chauffage (39) au second échangeur thermique de chauffage (26) sont reliés au corps profilé creux (43) agencé à l'intérieur de la région supérieure du réservoir tampon de liquide de chauffage (39), et **en ce que** les conduits de transport de liquide (24) allant du premier échangeur thermique de chauffage (23) et les conduits de transport de liquide (24) allant du second échangeur thermique de chauffage (26) à la région inférieure du réservoir tampon de liquide de chauffage (39) sont reliés au corps profilé creux (44) agencé à l'intérieur de la région inférieure du réservoir tampon de liquide de chauffage (39).

5. Installation de pasteurisation selon l'une des revendications 1 à 4, **caractérisée en ce qu'**une sortie (46) du moyen de refroidissement (22) est reliée à une région inférieure d'un réservoir tampon de liquide de refroidissement (45) via des conduits de transport de liquide (24) et au moins un moyen de coupure (25) agencés uniquement entre la sortie (46) du moyen de refroidissement (22) et la région inférieure du réservoir tampon de liquide de refroidissement (45), et une entrée (47) du moyen de refroidissement (22) est reliée à une région supérieure du réservoir tampon de liquide de refroidissement (45) via des conduits de transport de liquide (24) et au moins un moyen de coupure (25) agencés uniquement entre l'entrée (47) du moyen de refroidissement (22) et la région supérieure du réservoir tampon de liquide de refroidissement (45), et **en ce que** séparément, à d'autres positions du réservoir tampon de liquide de refroidissement (45), une région inférieure et une région supérieure du réservoir tampon de liquide de refroidissement (45) sont reliées opérationnellement au côté primaire du premier échangeur thermique de refroidissement (32) via des conduits de transport de liquide (24) et au moins un autre moyen de coupure (25) agencés uniquement entre le réservoir tampon de liquide de refroidissement (45) et le premier échangeur thermique de refroidissement (32), et la région inférieure et la région supérieure du réservoir tampon de refroidissement (45) sont également reliées opérationnellement au côté primaire du second échangeur thermique de refroidissement (33) via des conduits de transport de liquide (24) et au moins un autre moyen de coupure (25) agencés uniquement entre le réservoir tampon de liquide de refroidissement (45) et le second échangeur thermique de refroidissement (33), dans laquelle au moins un autre moyen d'acheminement de liquide de refroidissement (48) est agencé pour acheminer le liquide de refroidissement de la région inférieure du réservoir tampon de liquide de refroidissement (45) à travers le côté primaire du premier échangeur thermique de refroidissement (32) et/ou à travers le côté primaire du second échangeur thermique de refroidissement (33), et de retour dans la région supérieure du réservoir tampon de liquide de refroidissement (45).

6. Installation de pasteurisation selon la revendication 5, **caractérisée en ce que** les conduits de transport de liquide (24) allant de la sortie (46) du moyen de refroidissement (22) à la région inférieure du réservoir tampon de liquide de refroidissement (45) sont reliés à un corps profilé creux (49) avec des ouvertures à l'intérieur d'une section de sa surface circonférentielle, lequel corps profilé creux (49) est agencé à l'intérieur de la région inférieure du réservoir tampon de liquide de refroidissement (45) de telle sorte que toutes les ouvertures font face à une extrémité inférieure du réservoir tampon de liquide de refroidissement (45), et **en ce que** les conduits de transport de liquide (24) allant de la région supérieure du réservoir tampon de liquide de refroidissement (45) à l'entrée (47) du moyen de refroidissement (22) sont reliés à un autre corps profilé creux (50) avec des ouverture à l'intérieur d'une section de sa surface circonférentielle, lequel corps profilé creux (50) est agencé à l'intérieur de la région supérieure du réservoir tampon de liquide de refroidissement (45) de telle sorte que toutes les ouvertures font face à une extrémité supérieure du réservoir tampon de liquide de refroidissement (45).

7. Installation de pasteurisation selon la revendication 6, **caractérisée en ce que** les conduits de transport de liquide (24) allant de la région inférieure du réservoir tampon de liquide de refroidissement (45) au premier échangeur thermique de refroidissement (32) et les conduits de transport de liquide (24) allant de la région inférieure du réservoir tampon de liquide de refroidissement (45) au second échangeur thermique de refroidissement (33) sont reliés au corps profilé creux (49) agencé à l'intérieur de la région inférieure du réservoir tampon de liquide de refroidissement (45), et **en ce que** les conduits de transport de liquide (24) allant du premier échangeur thermique de refroidissement (32) et les conduits de transport de liquide (24) allant du second échangeur de refroidissement (33) à la région supérieure du réservoir tampon de liquide de refroidissement (45) sont reliés au corps profilé creux (50) agencé à l'intérieur de la région supérieure du réservoir tampon de liquide de refroidissement (45).

8. Installation de pasteurisation selon l'une des revendications 1 à 7, **caractérisée en ce qu'**elle comprend au moins un dispositif de refroidissement supplémentaire (54) pour refroidir davantage le(s) liquide(s) de traitement ayant un bas niveau de température de la première et/ou de la seconde chaîne de pasteurisation (2, 3).

9. Installation de pasteurisation selon la revendication 8, **caractérisée en ce que** l'au moins un dispositif de refroidissement supplémentaire (54) est une tour de refroidissement refroidie par air ou refroidie par eau avec un échangeur thermique (55) pour acheminer à travers le(s) liquide(s) de traitement.

10. Procédé de fonctionnement d'une installation de pasteurisation (1) selon l'une des revendications 1 à 9, comprenant une première chaîne de pasteurisation (2) et au moins une seconde chaîne de pasteurisation (3),
dans lequel dans chacune des première et seconde chaînes de pasteurisation (2, 3), des conteneurs étanches (4) remplis de produit alimentaire sont acheminés à travers au moins une zone de chauffage (7, 8, 9, 10) et ensuite à travers au moins une zone de refroidissement (11, 12),
et dans lequel dans chacune des première et seconde chaîne de pasteurisation (2, 3) le produit alimentaire est chauffé dans l'au moins une zone de chauffage (7, 8, 9, 10) respective en distribuant un liquide de traitement à température régulée sur les conteneurs (4), et le produit alimentaire est ensuite refroidi dans l'au moins une zone de refroidissement (11, 12) respective en distribuant un liquide de traitement à température régulée sur les conteneurs (4),
et dans lequel un liquide de chauffage est chauffé au moyen d'un moyen de chauffage (21) de la pompe à chaleur (20) et un liquide de refroidissement est refroidi au moyen du moyen de refroidissement (22) de la pompe à chaleur (20),
**caractérisé en ce que**
sur la base d'une demande de chauffage pour les première et seconde chaînes de pasteurisation (2, 3), le liquide de chauffage chauffé provenant du moyen de chauffage (21) de la pompe à chaleur (20) est utilisé pour chauffer le liquide de traitement ayant un niveau de température élevé de la première chaîne de pasteurisation (2) au moyen du premier échangeur thermique de chauffage (23), et/ou le liquide de chauffage chauffé provenant du moyen de chauffage (21) de la pompe à chaleur (20) est utilisé pour chauffer le liquide de traitement ayant un niveau de température élevé de la seconde chaîne de pasteurisation (3) au moyen du second échangeur thermique de chauffage (26),
et **en ce que** sur la base d'une demande de refroidissement pour les première et seconde chaînes de pasteurisation (2, 3), le liquide de refroidissement refroidi provenant du moyen de refroidissement (22) de la pompe à chaleur (20) est utilisé pour refroidir le liquide de traitement ayant un niveau de température bas de la première chaîne de pasteurisation (2) au moyen du premier échangeur thermique de refroidissement (32), et/ou le liquide de refroidissement refroidi provenant du moyen de refroidissement (22) de la pompe à chaleur (20) est utilisé pour refroidir le liquide de traitement ayant un niveau de température bas de la seconde chaîne de pasteurisation (3) au moyen du second échangeur thermique de refroidissement (33).

11. Procédé selon la revendication 10, **caractérisé en ce que** sur la base d'une demande de chauffage pour les première et seconde chaînes de pasteurisation (2, 3), le liquide de chauffage chauffé provenant du moyen de chauffage (21) de la pompe à chaleur (20) est fourni dans une région supérieure d'un réservoir tampon de liquide de chauffage (39), et le liquide de chauffage est renvoyé dans le moyen de chauffage (21) de la pompe à chaleur (20) à partir d'une région inférieure du réservoir tampon de liquide de chauffage (39).

12. Procédé selon la revendication 11, **caractérisé en ce que** sur la base d'une demande de chauffage pour les première et seconde chaînes de pasteurisation (2, 3), du liquide de chauffage est fourni dans le premier échangeur thermique de chauffage (23) et/ou le second échangeur de chauffage (26) à partir de la région supérieure du réservoir tampon de liquide de chauffage (39) afin de chauffer le liquide de traitement ayant un niveau de température élevé de la première chaîne de pasteurisation (2) et/ou de la seconde chaîne de pasteurisation (3), et le liquide de chauffage provenant du premier échangeur thermique (23) et/ou du second échangeur thermique (26) est renvoyé dans la région inférieure du réservoir tampon de liquide de chauffage (39).

13. Procédé selon la revendication 11, **caractérisé en ce que** le liquide de chauffage chauffé provenant du moyen de chauffage (21) est fourni dans le réservoir tampon de liquide de chauffage (39) via un corps profilé creux (43) avec des ouvertures à l'intérieur d'une section de sa surface circonférentielle, le corps profilé creux (43) étant agencé à l'intérieur de la région supérieure du réservoir tampon de liquide de chauffage (39) de telle sorte que toutes les ouvertures font face à une extrémité supérieure du réservoir tampon de liquide de chauffage (39), et que le liquide de chauffage est renvoyé du réservoir tampon de liquide de chauffage (39) dans le moyen de chauffage (21) via un autre corps profilé creux (44) avec des ouvertures à l'intérieur d'une section de sa surface circonférentielle, l'autre corps profilé creux (44) étant agencé à l'intérieur de la région inférieure du réservoir tampon de liquide de chauffage (39) de telle sorte que toutes les ouvertures font face à une extrémité inférieure du réservoir tampon de liquide de chauffage (39).

14. Procédé selon les revendications 12 et 13, **caractérisé en ce que** sur la base d'une demande de chauffage pour les première et seconde chaînes de pasteurisation (2, 3), le liquide de chauffage provenant de la région supérieure du réservoir tampon de liquide de chauffage (39) est fourni dans le premier échangeur thermique de chauffage (23) et/ou le second échangeur thermique de chauffage (26) via le corps profilé creux (43), et le liquide de chauffage provenant du premier et/ou du second échangeur thermique de chauffage (23, 26) est renvoyé dans la région inférieure du réservoir tampon de liquide de chauffage (39) via l'autre corps profilé creux (44).

15. Procédé selon l'une des revendications 10 à 14, **caractérisé en ce que** sur la base d'une demande de refroidissement pour les première et seconde chaînes de pasteurisation (2, 3), un liquide de refroidissement refroidi provenant du moyen de refroidissement (22) de la pompe à chaleur (20) est fourni dans une région inférieure d'un réservoir tampon de liquide de refroidissement (45), et le liquide de refroidissement est renvoyé dans le moyen de refroidissement (22) de la pompe à chaleur (20) à partir d'une région supérieure du réservoir tampon de liquide de refroidissement (45).

16. Procédé selon la revendication 15, **caractérisé en ce que** sur la base d'une demande de refroidissement pour les première et seconde chaînes de pasteurisation (2, 3), du liquide de refroidissement est fourni dans le premier échangeur thermique de refroidissement (32) et/ou le second échangeur thermique de refroidissement (33) à partir de la région inférieure du réservoir tampon de liquide de refroidissement (45) afin de refroidir le liquide de traitement avec un niveau de température bas de la première chaîne de pasteurisation (2) et/ou de la seconde chaîne de pasteurisation (3), et le liquide de refroidissement provenant du premier échangeur thermique de refroidissement (32) et/ou du second échangeur thermique de refroidissement (33) est renvoyé dans la région supérieure du réservoir tampon de liquide de refroidissement (45).

17. Procédé selon la revendication 15, **caractérisé en ce que** le liquide de refroidissement refroidi provenant du moyen de refroidissement (22) de la pompe à chaleur (20) est fourni dans le réservoir tampon de liquide de refroidissement (45) via un corps profilé creux (49) avec des ouvertures à l'intérieur d'une section de sa surface circonférentielle, le corps profilé creux (49) étant agencé à l'intérieur de la région inférieure du réservoir tampon de liquide de refroidissement (45) de telle sorte que toutes les ouvertures font face à une extrémité inférieure du réservoir tampon de liquide de refroidissement (45), et que le liquide de refroidissement provenant du réservoir tampon de liquide de refroidissement (45) est renvoyé dans le moyen de refroidissement (22) via un autre corps profilé creux (50) avec des ouvertures à l'intérieur d'une section de sa surface circonférentielle, l'autre corps profilé creux (50) étant agencé à l'intérieur de la région supérieure du réservoir tampon de liquide de refroidissement (45) de telle sorte que toutes les ouvertures font face à une extrémité supérieure du réservoir tampon de liquide de refroidissement (45).

18. Procédé selon les revendications 16 et 17, **caractérisé en ce que** sur la base d'une demande de chauffage pour les première et seconde chaînes de pasteurisation (2, 3), du liquide de refroidissement provenant de la région inférieure du réservoir tampon de liquide de refroidissement (45) est fourni dans le premier échangeur thermique de refroidissement (32) et/ou le second échangeur thermique de refroidissement (33) via le corps profilé creux (49), et le liquide de refroidissement provenant du premier et/ou du second échangeur thermique de refroidissement (32, 33) est renvoyé dans la région supérieure du réservoir tampon de liquide de refroidissement (45) via l'autre corps profilé creux (50).

19. Procédé selon l'une des revendications 10 à 18, **caractérisé en ce que** sur la base d'une demande de refroidissement pour les première et seconde chaînes de pasteurisation (2, 3), le(s) liquide(s) de traitement ayant un bas niveau de température de la première et/ou de la seconde chaîne de pasteurisation (2, 3) est/sont en davantage refroidi(s) au moyen d'au moins un dispositif de refroidissement supplémentaire (54).

20. Procédé selon la revendication 18, **caractérisé en ce que** le(s) liquide(s) de traitement ayant un bas niveau de température est/sont refroidi(s) en les acheminant à travers un échangeur thermique (55) d'au moins une tour de refroidissement refroidie par air ou refroidie par eau.
